(19) Europäisches Patentamt / European Patent Office / Office européen des brevets

(11) **EP 3 858 773 B1**

(12) **EUROPEAN PATENT SPECIFICATION**

(45) Date of publication and mention
of the grant of the patent:
**10.05.2023 Bulletin 2023/19**

(21) Application number: **21150200.0**

(22) Date of filing: **05.01.2021**

(51) International Patent Classification (IPC):
**B65H 57/00** *(2006.01)*   **B25J 9/00** *(2006.01)*
**B65H 54/26** *(2006.01)*   **B25J 11/00** *(2006.01)*
**G05B 19/42** *(2006.01)*   **B25J 9/16** *(2006.01)*

(52) Cooperative Patent Classification (CPC):
**B65H 57/003; B25J 9/1656; B25J 11/00;**
**B65H 54/26; G05B 19/42;** B65H 2701/3132;
G05B 2219/45193

(54) **YARN PROCESSING SYSTEM, AUTOMATIC YARN THREADING DEVICE, TEACHING METHOD, AND TEACHING SYSTEM**

FADENVERARBEITUNGSSYSTEM, AUTOMATISCHE FADENEINFÄDELVORRICHTUNG, LEHRVERFAHREN UND LEHRSYSTEM

SYSTÈME DE TRAITEMENT DE FIL, DISPOSITIF D'ENFILAGE DE FIL AUTOMATIQUE, PROCÉDÉ D'APPRENTISSAGE ET SYSTÈME D'APPRENTISSAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.02.2020 JP 2020016014**

(43) Date of publication of application:
**04.08.2021 Bulletin 2021/31**

(73) Proprietor: **TMT Machinery, Inc.**
**Osaka-shi, Osaka 541-0041 (JP)**

(72) Inventors:
• **Takahashi, Tomoya**
**Kyoto, 612-8686 (JP)**
• **Nasu, Aoi**
**Kyoto, 612-8686 (JP)**

(74) Representative: **Hoffmann Eitle**
**Patent- und Rechtsanwälte PartmbB**
**Arabellastraße 30**
**81925 München (DE)**

(56) References cited:
**JP-A- 2019 002 091   US-A1- 2016 101 522**

**Description**

BACKGROUND OF THE INVENTION

The present invention relates to a yarn processing system, an automatic yarn threading device in the yarn processing system, a teaching method in the yarn processing system, and a teaching system in the yarn processing system.

A spun yarn take-up system (yarn processing system) recited in JP 2019 002091 A) performs yarn threading to a take-up unit (yarn processing apparatus) which is configured to take up a yarn and wind the yarn onto a bobbin, by using a yarn threading robot having a yarn threading arm. A controller for controlling the yarn threading robot drives the yarn threading arm based on arm movement information (operation information) regarding how the yarn threading arm is moved. The operation information typically includes information of coordinates of points to which the leading end portion of the yarn threading arm is moved in a predetermined order. The controller moves the leading end portion of the yarn threading arm in a predetermined order based on information of coordinates of points, which has been taught to the yarn threading robot through known teaching, for example. In this way, the yarn threading to the yarn processing apparatus is performed.

SUMMARY OF THE INVENTION

In regard to the processes of the above-described teaching, firstly, it is necessary to teach coordinates of all points to the yarn threading robot, while manually moving the yarn threading arm by using, for example, a known teaching pendant, in a state in which the yarn threading robot is not performing yarn threading to the yarn processing apparatus. Subsequently, secondly, it is necessary to check if the yarn threading robot correctly operates while the yarn threading robot is actually performing the yarn threading, and to adjust the coordinates of each point in accordance with a result of the check. Furthermore, in a yarn processing system having plural yarn processing apparatuses, the teaching is similarly performed for each yarn processing apparatus. Furthermore, when a yarn processing apparatus is replaced or maintained, the position of each component of the apparatus may be changed, and the above-described teaching must be done again in accordance with the change. In this way, enormous time and labor are required for the teaching.

An object of the present invention is to reduce the time and labor required for teaching for a yarn threading robot.

According to a first aspect of the invention, a yarn processing system includes: at least one yarn processing apparatus which is configured to process a yarn; a yarn threading robot which includes a yarn threading arm and is configured to perform yarn threading to the at least one yarn processing apparatus by using the yarn threading arm; a storage unit which is able to store information regarding coordinates of points to which a predetermined part of the yarn threading arm is moved in a predetermined order when the yarn threading to the at least one yarn processing apparatus is performed; and a control unit which is configured to cause the yarn threading robot to perform the yarn threading based on the information regarding the coordinates of the points, the points being grouped into predetermined groups, the control unit acquiring coordinates of a specific point based on a result of teaching regarding the yarn threading, each of the predetermined groups including at least one specific point, and the control unit acquiring coordinates of a relative point which is different from the at least one specific point, based on predetermined relative coordinates relative to the coordinates of the specific point belonging to the same group as the relative point.

In order to cause a yarn threading robot to correctly perform yarn threading, teaching is typically required to teach the yarn threading robot the operation information of a yarn threading arm. In this regard, if information of positional relationship between points (i.e., relative coordinates), which can be determined in advance before the teaching (e.g., when the system is designed), is utilized for the operation of the yarn threading arm, it is possible to reduce the number of coordinates taught to the yarn threading robot. In this regard, a yarn processing apparatus typically has plural yarn threading positions and the positional relationship between these yarn threading positions may be deviated at the time of installation of the yarn processing apparatus due to, for example, an installation error. For this reason, in order to obtain the positional accuracy of the yarn threading arm, it is necessary to provided plural specific points whose absolute coordinates are taught.

According to this aspect, the time and labor for teaching the yarn threading robot the coordinates of the relative points are reduced, as the coordinates of the specific points are acquired based on a result of teaching and the coordinates of the relative points are acquired based on the relative coordinates determined in advance. To put it differently, it is possible to reduce the number of coordinates to be taught to the yarn threading robot. The time and labor required for teaching for the yarn threading robot are therefore reduced.

According to a second aspect of the invention, the yarn processing system of the first aspect is arranged such that the at least one yarn processing apparatus includes a yarn threading member to which the yarn is threaded, and the at least one specific point includes a point to which the predetermined part of the yarn threading arm is moved when the yarn is threaded to the yarn threading member.

When a yarn is threaded to a yarn threading member, it is principally necessary to strictly control the operation of a yarn threading arm. Meanwhile, when, for example, the yarn threading arm moves to a position for preparing yarn threading to the yarn threading member or move to the next position after the yarn threading to the yarn threading member, strict control is not required in comparison with the yarn threading to the yarn threading member.

According to the aspect of the invention, the points to which the yarn threading arm moves when the yarns are threaded to the yarn threading members are included in the specific points. It is therefore possible to achieve highly accurate positioning of the yarn threading arm at positions where strict control is required. In regard to positions where strict control is not required, the yarn threading arm is moved based on the relative coordinates. It is therefore possible to reduce the number of coordinates to be taught to the yarn threading robot.

According to a third aspect of the invention, the yarn processing system of the second aspect is arranged such that the yarn threading member includes a yarn guide that guides the yarn to a downstream side in a running direction of the running yarn.

Typically, in consideration of the suppression of upsizing of the apparatus, a yarn guide is required to be as small as possible. For this reason, when yarns are threaded to the yarn guides, it is necessary to strictly control the yarn threading arm. According to the aspect of the invention, the coordinates of the points to which the yarn threading arm moves when the yarns are threaded to the yarn guides are included in the specific points. On this account, when the yarns are threaded to the yarn guides, the yarn threading arm can be strictly controlled.

According to a fourth aspect of the invention, the yarn processing system of the second or third aspect is arranged such that the at least one yarn processing apparatus is configured to be able to simultaneously process plural yarns, and the yarn threading member includes a regulatory guide that regulates intervals of the yarns neighboring to one another.

In consideration of the suppression of upsizing of the apparatus, a regulatory guide is required to be as small as possible. It is therefore necessary to strictly control the yarn threading arm when yarn threading is performed to the regulatory guide. According to the aspect of the invention, it is possible to strictly control the yarn threading arm when plural yarns are correctly threaded to the regulatory guide.

According to a fifth aspect of the invention, the yarn processing system of any one of the first to fourth aspects is arranged such that the at least one yarn processing apparatus includes a yarn feed roller by which the yarn is fed to the downstream side in the running direction of the running yarn, and the relative point includes a point to which the predetermined part of the yarn threading arm is moved when the yarn is threaded to the yarn feed roller.

Various types of yarn feed rollers are used in accordance with the use, and yarn threading can be correctly done even if the control is not as strict as the control in yarn threading to a yarn guide, etc. When yarns are threaded to such a yarn feed roller, the yarn threading arm is moved based on the relative coordinates. It is therefore possible to reduce the number of coordinates to be taught to the yarn threading robot.

According to a sixth aspect of the invention, the yarn processing system of any one of the first to fifth aspects further includes, as the at least one yarn processing apparatus, a first yarn processing apparatus and a second yarn processing apparatus different from the first yarn processing apparatus, the storage unit being capable of storing coordinates of a predetermined first installation point of the first yarn processing apparatus and coordinates of a predetermined second installation point of the second yarn processing apparatus, the control unit being capable of treating the coordinates of a plurality of the at least one specific point as variables, and the control unit calculating the coordinates of the specific points regarding the second yarn processing apparatus by using coordinates of the specific points regarding the first yarn processing apparatus and difference information which is information of a difference between the coordinates of the first installation point and the coordinates of the second installation point.

Even in an arrangement in which only the coordinates of specific points are taught to the yarn threading robot, the time and labor required for teaching may be enormous when the yarn processing system includes plural yarn processing apparatuses and it is necessary to teach the yarn threading robot the coordinates of the specific points of all yarn processing apparatuses. According to the aspect of the invention, the coordinates of the specific points regarding the second yarn processing apparatus can be roughly acquired by using the coordinates of the specific points regarding the first yarn processing apparatus and the difference information. It is therefore possible to cause the yarn threading arm to move substantially along the correct track from the beginning, when teaching regarding the yarn threading is performed for the second yarn processing apparatus. For this reason, when teaching regarding the yarn threading is performed for the second yarn processing apparatus, it is possible to save at least the time and labor for teaching the yarn threading robot the coordinates of the specific points while manually moving the yarn threading arm. As described above, it is possible to suppress the increase in time and labor for the teaching in the yarn processing system including plural yarn processing apparatuses.

According to a seventh aspect of the invention, the yarn processing system of the sixth aspect is arranged such that the storage unit is capable of storing adjustment information which is different from the difference information and is used for individually adjusting the coordinates of each of the specific points, and the control unit calculates the coordinates of the specific points regarding the second yarn processing apparatus by using the coordinates of the specific points regarding the first yarn processing apparatus, the difference information, and the adjustment information.

The positional relationship between specific points in each yarn processing apparatus may be slightly different between the yarn processing apparatuses due to, for example, an error (installation error) when the apparatuses are installed. Furthermore, in order to optimize conditions for yarn processing, the positions of components of each yarn processing apparatus may be finely adjusted by an operator, and the positions of specific points may be changed accordingly. On this account, even when the coordinates of the specific points regarding the first yarn processing apparatus and the difference information are used for acquiring the coordinates of the specific points regarding the second yarn processing apparatus, it is necessary in the teaching to finely adjust the coordinates of each specific point while actually performing the yarn threading to the second yarn processing apparatus. In the aspect of the invention, it is possible in the teaching to individually confirm the coordinates of each specific point while the yarn threading is being actually performed.

According to an eight aspect of the invention, the yarn processing system of the seventh aspect is arranged such that the control unit calculates the coordinates of the specific points regarding the second yarn processing apparatus at least before the yarn threading robot performs the yarn threading to the second yarn processing apparatus.

According to this aspect of the invention, when the adjustment information is updated, it is possible to immediately reflect the result of the update to the operation of the yarn threading.

According to a ninth aspect of the invention, the yarn processing system of any one of the first to eighth aspects is arranged such that, when a teaching mode which is a control mode for performing the teaching is being executed, at a time of adjustment of the coordinates of one of the specific points, the control unit is able to uninterruptedly move the predetermined part of the yarn threading arm in the predetermined order to the points belonging to one of the groups including that one of the specific points.

According to this aspect of the invention, when the coordinates of the specific points are adjusted in the teaching, the operation of the yarn threading can be checked at once for each group. It is therefore possible to shorten the time required for checking the operation in the teaching as compared to a case where each step in the operation of the yarn threading is checked.

According to a tenth aspect of the invention, the yarn processing system of any one of the first to ninth aspects is arranged such that the at least one yarn processing apparatus is a take-up unit configured to take-up the yarn spun out from a spinning apparatus and wind the yarn onto a bobbin, and the yarn threading robot is configured to perform the yarn threading to the take-up unit while sucking and retaining the yarn.

Typically, a large number of spun yarns are rapidly spun out from a spinning apparatus. Furthermore, when spun yarns are threaded to a take-up unit, the spun yarns sucked by a yarn threading robot are wasted without contributing to the production. On this account, if, in the teaching, the time to adjust the coordinates of plural points is long while the yarn threading robot is actually performing the yarn threading, a large number of the yarns are wastefully discarded. According to the aspect of the invention, because in the present embodiment the number of coordinates that the yarn threading robot are taught is reduced, the time for the actual yarn threading is shortened in the teaching. It is therefore possible to reduce the amount of the wasted yarns.

According to an eleventh aspect of the invention, an automatic yarn threading device includes: a yarn threading robot which includes a yarn threading arm and is configured to perform yarn threading to a yarn processing apparatus by using the yarn threading arm; a storage unit which is able to store information regarding coordinates of points to which a predetermined part of the yarn threading arm is moved in a predetermined order when the yarn threading to the yarn processing apparatus is performed; and a control unit which is configured to cause the yarn threading robot to perform the yarn threading based on the information regarding the coordinates of the points, the points being grouped into predetermined groups, the control unit acquiring coordinates of a specific point based on a result of teaching regarding the yarn threading, each of the predetermined groups including at least one specific point, and the control unit acquiring coordinates of a relative point which is different from the at least one specific point, based on predetermined relative coordinates relative to the coordinates of the specific point belonging to the same group as the relative point.

According to this aspect of the invention, in the same manner as in the first aspect, it is possible to reduce the number of coordinates to be taught to the yarn threading robot. The time and labor required for teaching for the yarn threading robot are therefore reduced.

According to a twelfth aspect of the invention, the automatic yarn threading device of the eleventh aspect is arranged such that the points belonging to each of the groups are points successively aligned in the predetermined order.

According to this aspect of the invention, it is possible to, for example, easily manage the information of coordinates as compared to a case where points belonging to the same group are discontinuous in terms of a predetermined order.

According to a thirteenth aspect of the invention, in a teaching method of teaching the yarn threading robot information regarding an operation of the yarn threading arm in the yarn threading in the yarn processing system according to any one of the first to tenth aspects, coordinates of only the specific points among the points being taught to the yarn threading robot.

According to this aspect of the invention, because the coordinates of relative points can be acquired by teaching the yarn threading robot the coordinates of the specific points, it is possible to omit the teaching of the coordinates of the relative points. The time and labor required for teaching for the yarn threading robot are therefore reduced.

According to a fourteenth aspect of the invention, a teaching system for teaching a yarn threading robot including a yarn threading arm for performing yarn threading to a yarn processing apparatus coordinates of points through which a predetermined part of the yarn threading arm passes in a predetermined order when the yarn threading is performed includes: a storage unit which stores affiliation information indicating that the points belong to groups, classification information in which at least one of the points belonging to each of the groups is specified as a specific point whereas the remaining points are specified as relative points, and relative coordinates information in which relative coordinates relative to the specific point belonging to the same group as the relative points are defined; an arm moving unit which is configured to move, for each of the groups, the predetermined part of the yarn threading arm to pass through all points belonging to each of the groups in the predetermined order; a coordinates adjustment facilitation unit which is configured to facilitate adjustment of the coordinates of the specific point after the arm moving unit moves the yarn threading arm for each of the groups; a relative coordinates information acquisition unit which is configured to acquire coordinates of the relative points based on the adjusted coordinates of the specific point and the relative coordinates information; and a repetition unit which is configured to repeat movement of the yarn threading arm by the arm moving unit performed for each of the groups, until the coordinates of all points belonging to each of the groups are confirmed.

According to this aspect of the invention, in the same manner as in the first aspect, it is possible to reduce the number of coordinates to be taught to the yarn threading robot. The time and labor required for teaching for the yarn threading robot are therefore reduced.

BRIEF DESCRIPTION OF THE DRAWINGS

FIG. 1 is a front elevation of a spun yarn take-up system of an embodiment of the present invention.
FIG. 2 is a profile of a take-up unit.
Each of FIG. 3(a) and FIG. 3(b) illustrates fulcrum guides.
FIG. 4 is a block diagram illustrating an electric structure of the spun yarn take-up system.
Each of FIG. 5(a) to FIG. 5(f) illustrates yarn threading to a regulatory guide and a godet roller.
FIG. 6 shows yarn threading to fulcrum guides.
FIG. 7 shows points to which a leading end portion of a yarn threading unit is required to move in a predetermined order.
FIG. 8 conveniently illustrates groups of points.
FIG. 9 is a flow chart showing the processes of teaching.
FIG. 10 is a flow chart showing part of the processes of teaching.
FIG. 11 is a flow chart of the control of the yarn threading arm in a production mode.

DESCRIPTION OF THE PREFERRED EMBODIMENTS

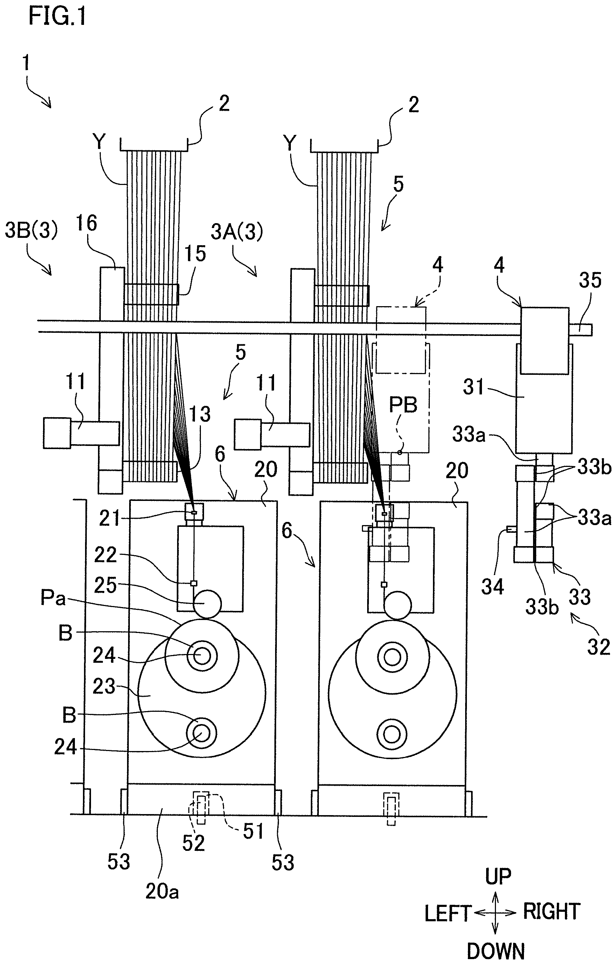

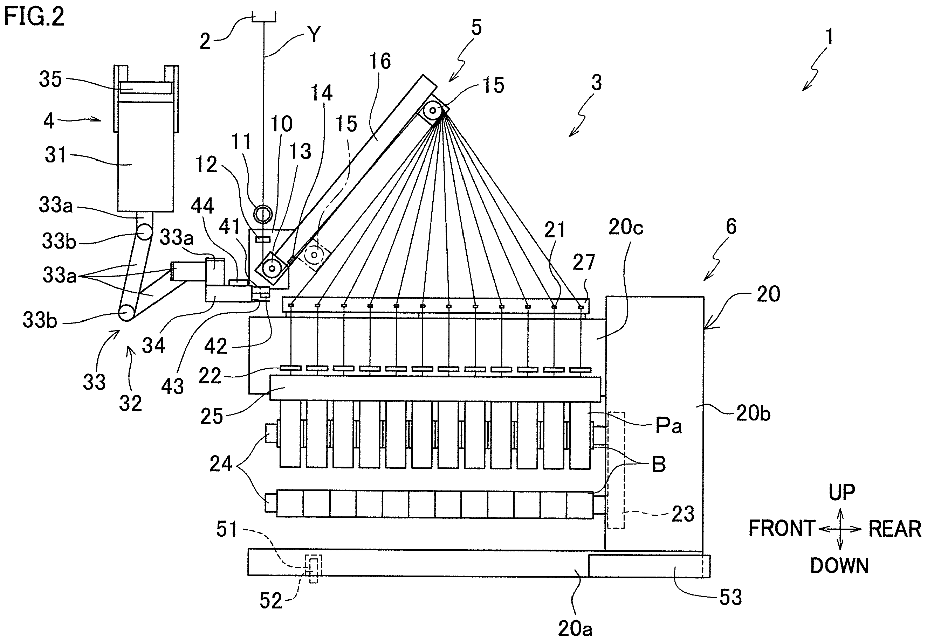

The following will describe an embodiment of the present invention. Hereinafter, forward, rearward, leftward, rightward, upward, and downward directions shown in FIG. 1 and FIG. 2 will be consistently used for convenience of explanation. Furthermore, the direction in which yarns Y run will be referred to as a yarn running direction (running direction of the present invention).

(Schematic Outline of Spun Yarn Take-Up System)

FIG. 1 is a front elevation of a spun yarn take-up system 1 of the present embodiment (yarn processing system of the present invention). The spun yarn take-up system 1 includes spinning apparatuses 2, take-up units 3 (yarn processing apparatuses of the present invention), and a yarn threading robot 4. The spinning apparatuses 2 are aligned in the left-right direction and each spins out plural yarns Y (e.g., 12 yarns). The take-up units 3 are provided below the spinning apparatuses 2 and are aligned in the left-right direction to correspond to the respective spinning apparatuses 2. Each take-up unit 3 is configured to take up yarns Y spun out from the spinning apparatus 2 and form packages Pa by simultaneously winding the yarns Y onto plural (e.g., 12) bobbins B. The yarn threading robot 4 is movable in the left-right direction and performs an operation (yarn threading) to thread the yarns Y to parts constituting each take-up unit 3.

(Take-Up Unit)

The following will describe the structure of the take-up unit 3 with reference to FIG. 2. FIG. 2 is a profile of the take-up unit 3.

As shown in FIG. 2, the take-up unit 3 includes a take-up member 5 configured to take up yarns Y spun out from the spinning apparatus 2 and a winding unit 6 configured to wind the yarns Y taken up by the take-up member 5 onto bobbins B. The take-up member 5 includes a frame 10, an aspirator 11, a first regulatory guide 12, a first godet roller 13, a second regulatory guide 14, and a second godet roller 15. The first regulatory guide 12 and the second regulatory guide 14 are equivalent to regulatory guides of the present invention. The first godet roller 13 and the second godet roller 15 are equivalent to yarn feed rollers of the present invention.

The frame 10 is a member to which components of the take-up member 5 are attached or in which components of the take-up member 5 are accommodated. The frame 10 is attached to, for example, an unillustrated pillar. In FIG. 2, etc., only parts of the frame 10 where the first regulatory guide 12 and the first godet roller 13 are attached are shown, in order to simplify the drawings.

The aspirator 11 is provided at a front end portion of the take-up unit 3. The aspirator 11 is arranged to suck and retain yarns spun out from the spinning apparatus 2 in advance, before yarn threading to the take-up unit 3.

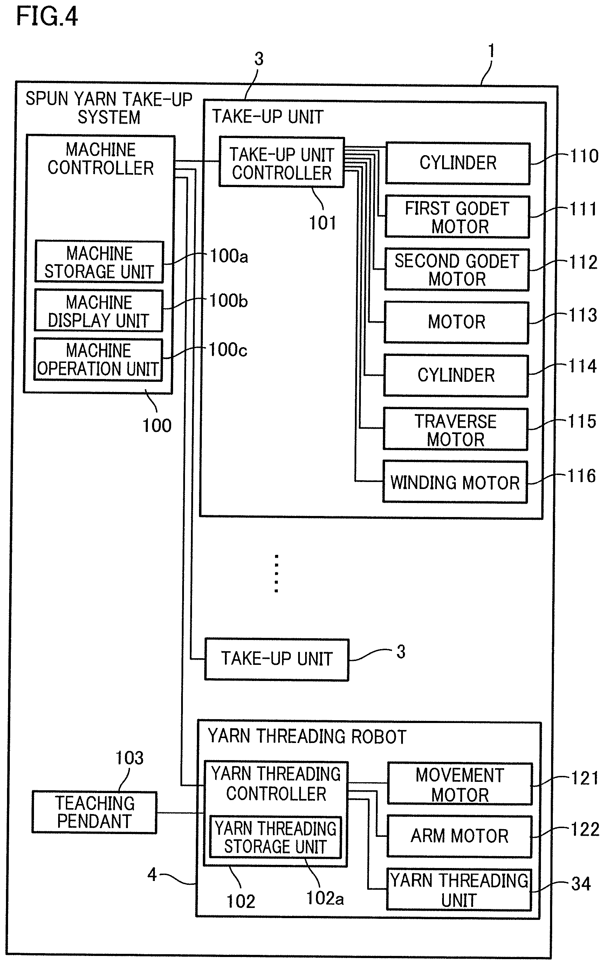

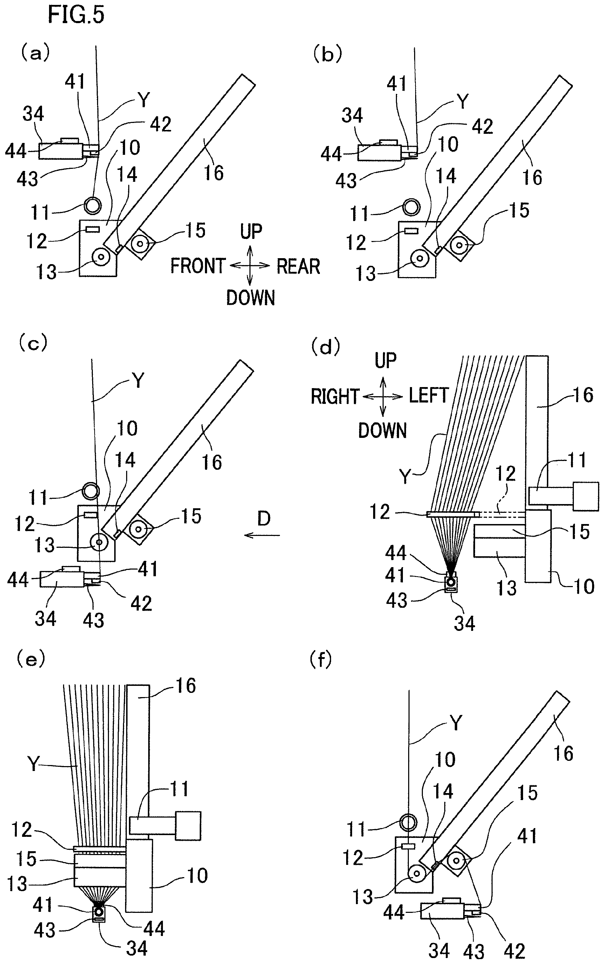

The first regulatory guide 12 is, for example, a known comb-teeth-shaped yarn guide, and is arranged to cause the yarns Y to be lined up in the left-right direction. The first regulatory guide 12 is provided below the aspirator 11 and extends rightward from a right end face of the frame 10. The first regulatory guide 12 regulates the movement of the yarns Y in the left-right direction such that, when the yarns Y are threaded, the interval between neighboring yarns Y is equal to a predetermined distance ((e.g., 4 mm). The first regulatory guide 12 is arranged to be movable in the left-right direction by, for example, a cylinder 110 (see FIG. 4). The first regulatory guide 12 is movable between a winding position where the first regulatory guide 12 is within a range between the ends of the first godet roller 13 in the left-right direction (see FIG. 5(e)) and a yarn threading position where the first regulatory guide 12 protrudes rightward from the leading end portion (right end portion) of the first godet roller 13 (see FIG. 5(d)).

The first godet roller 13 has an axis which is substantially parallel to the left-right direction, and is provided below the first regulatory guide 12. The yarns Y are wound onto the circumferential surface of the first godet roller 13. This circumferential surface is substantially flat in the axial direction of the first godet roller 13. The first godet roller 13 is rotationally driven by a first godet motor 111 (see FIG. 4) so as to send the yarns Y to the downstream side in the yarn running direction.

The second regulatory guide 14 is, for example, a comb-teeth-shaped yarn guide similar to the first regulatory guide 12, and regulates the movement of the yarns Y in the left-right direction when the yarns Y are threaded thereto. The second regulatory guide 14 is provided above and rearward of the first godet roller 13.

The second godet roller 15 is a roller having an axis substantially in parallel to the left-right direction, and is provided above and rearward of the second regulatory guide 14. The yarns Y are wound onto the circumferential surface of the second godet roller 15. This circumferential surface is substantially flat in the axial direction of the second godet roller 15. The second godet roller 15 is rotationally driven by a second godet motor 112 (see FIG. 4) so as to send the yarns Y to the downstream side in the yarn running direction. The second godet roller 15 is movably supported by a guide rail 16 which obliquely extends upward and rearward. The second godet roller 15 is movable along the guide rail 16 by, for example, a motor 113 (see FIG. 4) and unillustrated members such as a pulley pair, a belt, and an air device. With this, the second godet roller 15 is movable between a winding position (indicated by full lines in FIG. 2) where winding of the yarns Y is carried out and a yarn threading position (indicated by one-dot chain lines in FIG. 2) where the second godet roller 15 is close to the first godet roller 13 and yarn threading is carried out.

In the take-up member 5 structured as described above, as the first godet roller 13 and the second godet roller 15 on which the yarns Y are placed rotate, the yarns Y spun out from the spinning apparatus 2 are taken up and are fed toward the downstream side in the yarn running direction.

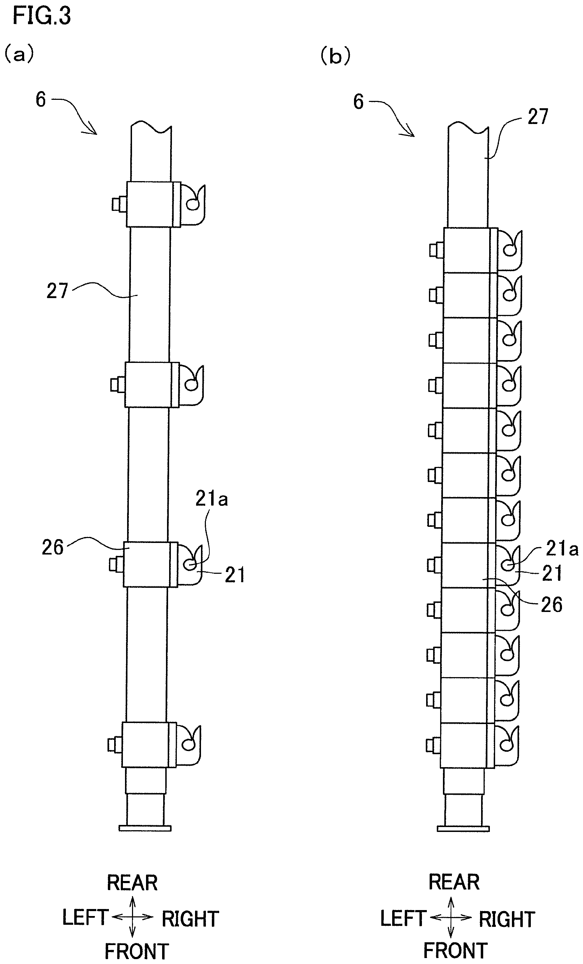

The following will describe the winding unit 6 with reference to FIG. 2, FIG. 3(a), and FIG. 3(b). FIG. 3(a) shows the positions of fulcrum guides 21 (described later) when the yarns Y are wound. FIG. 3(b) shows the positions of the fulcrum guides 21 when the yarn threading is carried out.

The winding unit 6 is arranged to form packages Pa by winding yarns Y onto bobbins B. The winding unit 6 is provided below the take-up member 5. As shown in FIG. 2, the winding unit 6 includes a frame 20, fulcrum guides 21 (yarn guides of the present invention), traverse guides 22, a turret 23, two bobbin holders 24, and a contact roller 25.

The frame 20 is a member which is placed on, for example, a floor of a factory, and to which components of the winding unit 6 are attached or in which components of the winding unit 6 are accommodated. As shown in FIG. 2, the frame 20 includes a base portion 20a which is provided on the floor surface and extends in the front-rear direction, a rear portion 20b which vertically extends from a rear end portion of the base portion 20a, and an upper portion 20c which extends forward from an upper part of the rear portion 20b. In the base portion 20a, a positioning hole 51 is formed to position the winding unit 6 when the winding unit 6 is installed in the factory. On the floor of the factory, a positioning pin 52 is provided to protrude upward. Moreover, on the floor of the factory, two guide rails 53 are provided on the left and right sides of the base portion 20a so as to extend in the front-rear direction. The positioning hole 51 is engaged with the positioning pin 52 and the base portion 20a is installed between the two guide rails 53. In this way, the frame 20 is positioned.

Each of the fulcrum guides 21 is a guide about which a yarn Y is traversed by each traverse guide 22. Each fulcrum guide 21 guides the yarn Y to the downstream side in the yarn running direction. As shown in FIG. 2 and FIGs. 3(a) and 3(b), the fulcrum guides 21 are provided for the respective yarns Y and are aligned in the front-rear direction. Each fulcrum guide 21 has a groove 21a which is open to the rear side. A yarn Y can be housed in each fulcrum guide 21 as the yarn Y is inserted into the groove 21a from the rear side. The fulcrum guide 21 and the first regulatory guide 12 and the second regulatory guide 14 described above are equivalent to a yarn threading member of the present invention.

As shown in FIG. 3(a) and FIG. 3(b), the fulcrum guides 21 are attached to sliders 26, respectively. The sliders 26 are supported to be movable along the guide rail 27 which extends in the front-rear direction. The sliders 26 are connected to a cylinder 114 (see FIG. 4). As the cylinder 114 is driven, the sliders 26 move in the front-rear direction along the guide rail 27. With this, the fulcrum guides 21 are movable between winding positions where the fulcrum guides 21 are separated from one another in the front-rear direction and the yarns Y are wound (see FIG. 3(a)) and yarn threading positions where the fulcrum guides 21 are close to one another at a front part of the guide rail 27 and yarn threading is performed (see FIG. 3(b)).

The traverse guides 22 are provided for the respective yarns Y and are aligned in the front-rear direction. Each traverse guide 22 is driven by a traverse motor 115 (see FIG. 4) and reciprocates in the front-rear direction. With this, the yarns Y threaded to the traverse guides 22 are traversed about the fulcrum guides 21. The turret 23 is a disc-shaped member having an axis which is substantially in parallel to the front-rear direction. The turret 23 is rotationally driven by a turret motor which is not illustrated. The two bobbin holders 24 have axes which are substantially in parallel to the front-rear direction. The bobbin holders 24 are rotatably supported at an upper end portion and a lower end portion of the turret 23. Each bobbin holder 24 supports bobbins B which are aligned in the front-rear direction. Each of the two bobbin holders 24 is rotationally driven by an individual winding motor 116 (see FIG. 4). The contact roller 25 is a roller having an axis substantially in parallel to the front-rear direction and is provided immediately above the upper bobbin holder 24. The contact roller 25 is configured to make contact with the surfaces of the packages Pa supported by the upper bobbin holder 24. With this, the contact roller 25 applies a contact pressure to the surfaces of the unfinished packages Pa, to adjust the shape of each package Pa.

In the winding unit 6 structured as described above, when the upper bobbin holder 24 is rotationally driven, the yarns Y traversed by the traverse guides 22 are wound onto the bobbins B, with the result that the packages Pa are formed (winding operation). When the formation of the packages Pa is completed, the turret 23 rotates to switch over the upper and lower positions of the two bobbin holders 24. As a result, the bobbin holder 24 having been at the lower position is moved to the upper position, which allows the yarns Y to be wound onto the bobbins B attached to the bobbin holder 24 having been moved to the upper position, to form packages Pa. The bobbin holder 24 to which the fully-formed packages Pa are attached is moved to the lower position, and the packages Pa are collected by, for example, an unillustrated package collector.

(Yarn Threading Robot)

The following will describe the structure of the yarn threading robot 4. Before the winding operation performed by the take-up unit 3, the yarn threading robot 4 threads the yarns Y to the first regulatory guide 12, the first godet roller 13, the second regulatory guide 14, the second godet roller 15, the fulcrum guides 21, etc. As shown in FIG. 2, the yarn threading robot 4 includes a main body 31 and a yarn threading arm 32.

The main body 31 is substantially rectangular parallelepiped in shape. Inside the main body 31, a later-described yarn threading controller 102 (see FIG. 4) is provided to control operations of the yarn threading arm 32, etc. The main body 31 hangs down from the rail member 35 which is provided in front of the take-up units 3 and extends in the left-right direction. The main body 31 is moved by a movement motor 121 (see FIG. 4) in the left-right direction along the rail member 35. The movement motor 121 includes, for example, a rotary encoder (not illustrated) which is configured to acquire information regarding a current location of the main body 31.

As shown in FIG. 2, the yarn threading arm 32 includes a robotic arm 33 and a yarn threading unit 34 attached to the leading end of the robotic arm 33. The robotic arm 33 is attached to the lower surface of the main body 31. The robotic arm 33 includes arms 33a and joints 33b connecting the arms 33a with one another. Each joint 33b incorporates therein an arm motor 122 (see FIG. 4). As the arm motor 122 (see FIG. 4) is driven, the arm 33a is swung about the joint 33b.

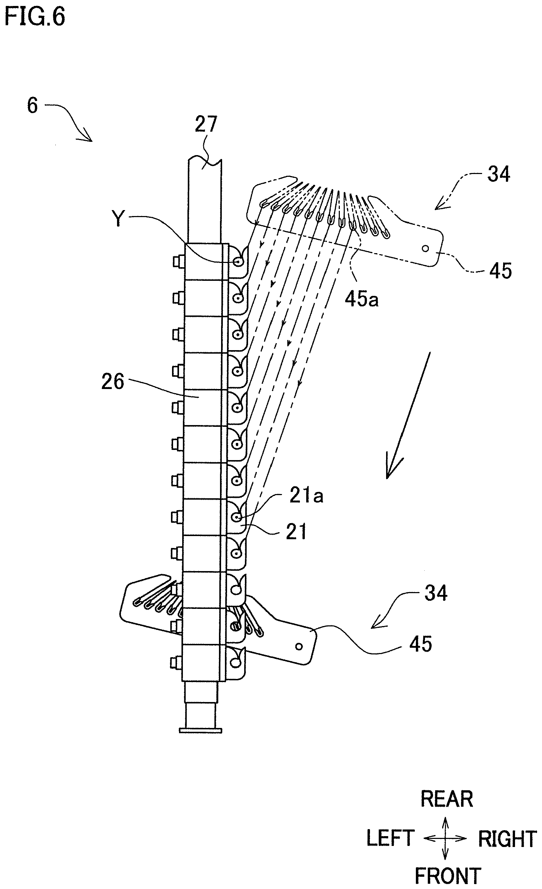

The yarn threading unit 34 is an end effector attached to a leading end portion (so-called mechanical interface) of the arm 33a which is on the most leading end side. As shown in FIG. 2, the yarn threading unit 34 includes a suction 41, a guide 42, a cutter 43, and a sensor 44. The suction 41 is arranged to be able to suck and retain the yarns Y. The suction 41 is, for example, connected to an unillustrated waste box, and parts of the yarns Y sucked by the suction 41 are thrown away into the waste box. The guide 42 is used when the yarns Y sucked and retained by the aspirator 11 are handed over to the suction 41 (described later). The cutter 43 is used for cutting the yarns Y when the yarns Y sucked and retained by the aspirator 11 are handed over to the suction 41. The sensor 44 is, for example, a known distance sensor. The sensor 44 is used for acquiring information of coordinates of the location where each take-up unit 3 is actually installed, in later-described teaching. The yarn threading unit 34 includes a yarn threading assisting member 45 (see FIG. 6) which temporarily retains the yarns Y when the yarns Y are threaded to the fulcrum guides 21. The yarn threading assisting member 45 has grooves 45a which are lined up along the longitudinal direction of the member 45. Each of the grooves 45a is open at one end. The intervals between the grooves 45a increase in the direction away from the open ends.

(Electric Configuration of Spun Yarn Take-Up System)

Now, an electric configuration of the spun yarn take-up system 1 will be described with reference to a block diagram in FIG. 4. As shown in FIG. 4, in the spun yarn take-up system 1, a take-up unit controller 101 is provided in each take-up unit 3. The take-up unit controller 101 controls members such as the cylinder 110, the first godet motor 111, the second godet motor 112, the motor 113, the cylinder 114, the traverse motor 115, and the winding motors 116. Although each take-up unit 3 includes two winding motors 116, FIG. 4 shows only one winding motor 116. Furthermore, while FIG. 4 shows only one traverse motor 115, each take-up unit 3 may include plural traverse motors 115.

In the spun yarn take-up system 1, the yarn threading controller 102 is provided in the yarn threading robot 4. As described above, the yarn threading controller 102 is provided in the main body 31, for example. Alternatively, the yarn threading controller 102 may be provided outside the main body 31. Alternatively, the yarn threading controller 102 may include a first controller (not illustrated) provided inside the main body 31 and a second controller (not illustrated) provided outside the main body 31. The yarn threading controller 102 includes members such as a CPU, a ROM, and a RAM, and controls the movement motor 121, the arm motor 122, and the yarn threading unit 34. Based on the operation information of the yarn threading arm 32, the yarn threading controller 102 controls the robotic arm 33 so that the leading end portion of the yarn threading unit 34 reaches predetermined points in a predetermined order. The yarn threading controller 102 includes a yarn threading storage unit 102a which stores the operation information regarding operations of the yarn threading arm 32. While the robotic arm 33 includes plural joints 33b and plural arm motors 122 corresponding to the respective joints 33b, FIG. 4 shows only one arm motor 122, and the other arm motors 122 are omitted. The yarn threading controller 102 is configured to obtain information of current location of the main body 31 based on a result of detection by the rotary encoder in the movement motor 121 (see FIG. 4).

To the yarn threading controller 102, a teaching pendant 103 is electrically connected. The teaching pendant 103 is used for performing teaching by which operation information of the yarn threading arm 32 is taught to the yarn threading robot 4. The teaching pendant 103 has, for example, a display and touch keys that are not illustrated, and allows an operator to input information regarding the posture and movement of the yarn threading arm 32. The teaching pendant 103 is configured to be able to send a signal regarding input information to the yarn threading controller 102. The teaching pendant 103 is not required to be always connected to the yarn threading control unit 102, and may be connected to the yarn threading controller 102 only when the operator performs teaching. Note that the details of the teaching method will be described later.

In addition to the above, the spun yarn take-up system 1 includes a machine controller 100 which serves to control the entire system. The machine controller 100 is, for example, a typical computer. As shown in FIG. 4, the machine controller 100 includes a machine storage unit 100a, a machine display unit 100b, and a machine operation unit 100c. The machine storage unit 100a includes a RAM or a hard disk, for example. The machine display unit 100b is a known display unit, for example. The machine operation unit 100c is a known keyboard or touch panel, for example. The machine controller 100 is electrically connected with the take-up unit controllers 101 of the take-up units 3 and the yarn threading controller 102. In cooperation with these controllers 101 and 102, the take-up unit controller 101 controls the entire spun yarn take-up system 1. The machine controller 100 is able to execute the following control modes: a production mode in which each take-up unit 3 winds yarns Y onto bobbins B so that packages Pa are produced; and a teaching mode in which later-described teaching in regarding yarn threading by the yarn threading robot 4 is performed.

(Outline of Yarn Threading by Yarn Threading Robot)

Yarn threading to the take-up unit 3 by the yarn threading robot 4 will be outlined with reference to FIG. 5(a) to FIG. 5(f) and FIG. 6. Each of FIG. 5(a) to FIG. 5(f) illustrates yarn threading onto the first regulatory guide 12, the first godet roller 13, the second regulatory guide 14, and the second godet roller 15. FIG. 5(d) shows a case where the members shown in FIG. 5(c) are viewed in the direction indicated by an arrow D. FIG. 6 shows yarn threading to the fulcrum guides 21. The following mainly describes controls performed by the yarn threading controller 102. The yarn threading controller 102 communicates with the machine controller 100 according to need. The machine controller 100 requests the take-up unit controller 101 of the take-up unit 3 which is the target of yarn threading to perform predetermined control.

Before the start of the yarn threading, the take-up unit controller 101 of the take-up unit 3 which is the target of the yarn threading controls the motor 113 (see FIG. 4) to move the second godet roller 15 along the guide rail 16 to the yarn threading position which is close to the first godet roller 13 (see one-dot chain lines in FIG. 2). Furthermore, the take-up unit controller 101 drives the cylinder 114 (see FIG. 4) to gather the fulcrum guides 21 to the yarn threading position on the front side so that the fulcrum guides 21 are close to one another (see FIG. 3(b)).

In the state described above, the yarn threading controller 102 controls the movement motor 121 to move the main body 31 to a position overlapping, in the front-rear direction, the take-up unit 3 which is the target of the yarn threading. Subsequently, the yarn threading controller 102 controls the arm motor 122 and the yarn threading unit 34 to cause the suction 41 to suck and hold the yarns Y spun out from the spinning apparatus 2. To be more specific, the yarn threading controller 102 moves the yarn threading unit 34 to a position where the leading end portion of the suction 41 is pressed onto the yarns Y at a location above the aspirator 11 (i.e., on the upstream side in the yarn running direction) and the yarns Y are correctly threaded to the guide 42 (see FIG. 5 (a)). Furthermore, the yarn threading controller 102 causes the suction 41 to suck the yarns Y and at the same time causes the cutter 43 to cut the yarns Y. As a result, the yarns Y are cut at a location above the aspirator 11 and the yarns Y having been cut are sucked and retained by the suction 41 (see FIG. 5(b)). In this way, the yarns Y are handed over from the aspirator 11 to the suction 41.

Subsequently, the yarn threading controller 102 moves, by using the robotic arm 33, the leading end portion of the yarn threading unit 34 to a location which is below, behind, and to the right of the first regulatory guide 12 (see FIG. 5(c) and two-dot chain lines in FIG. 5(d)). Subsequently, the take-up unit controller 101 drives the cylinder 110 (see FIG. 4) to move the first regulatory guide 12 from the winding position to the yarn threading position (indicated by full lines in FIG. 5(d)), i.e., move the first regulatory guide 12 rightward. Subsequently, the yarn threading controller 102 moves the leading end portion of the yarn threading unit 34 forward so as to thread the yarns Y to the first regulatory guide 12. Subsequently, the yarn threading controller 102 moves the leading end portion of the yarn threading unit 34 to the base end side in the axial direction of the first godet roller 13 (see FIG. 5(e)). At the same time, the take-up unit controller 101 drives the cylinder 110 (see FIG. 4) to move the first regulatory guide 12 from the yarn threading position to the winding position (see FIG. 5(e)), i.e., move the first regulatory guide 12 leftward. Subsequently, the yarn threading controller 102 moves the leading end portion of the yarn threading unit 34 so as to thread the yarns Y to the first godet roller 13, to the second regulatory guide 14, and to the second godet roller 15 in order (see FIG. 5(f)).

Subsequently, as shown in FIG. 6, the yarn threading controller 102 causes the yarn threading arm 32 to perform yarn threading to the fulcrum guides 21. To be more specific, the yarn threading controller 102 controls the yarn threading unit 34 to retain the yarns Y in the respective grooves 45a of the above-described yarn threading assisting member 45. (For details, please see JP 2017-082 379 A, for example.) Subsequently, the yarn threading controller 102 moves, by using the robotic arm 33, the yarn threading assisting member 45 to a predetermined position which is behind the fulcrum guides 21 (see two-dot chain lines in FIG. 6). Furthermore, the yarn threading controller 102 moves the yarn threading assisting member 45 obliquely leftward and forward (see full lines in FIG. 6). As a result, the yarns Y are threaded to the corresponding fulcrum guides 21. Thereafter, the take-up unit controller 101 moves the second godet roller 15 and the fulcrum guides 21 to the winding positions. In this way, the yarn threading is performed to the first regulatory guide 12, the first godet roller 13, the second regulatory guide 14, the second godet roller 15, and the fulcrum guides 21. Thereafter, furthermore, the yarn threading is performed to traverse guides 22 and unillustrated slits of bobbins B. (Details are omitted.)

In a known spun yarn take-up system, all coordinates of points where the leading end portion of the yarn threading unit 34 is required to be positioned in a predetermined order are stored in the yarn threading storage unit 102a as constants. To put it differently, when teaching is performed, it is necessary to store all coordinates of the points in the yarn threading storage unit 102a while manually moving the yarn threading arm 32 by using the teaching pendant 103. Subsequently, it is necessary to check if the yarn threading robot 4 correctly operates while actually performing the yarn threading, and to finely adjust the coordinates of each point in accordance with the result of the check. The teaching therefore requires an enormous amount of time, and an amount of yarns Y sucked by the suction 41 and wasted is huge.

In regard to yarn threading to plural take-up units 3, for example, only teaching regarding yarn threading to one reference take-up unit 3 may be performed, and correction may be performed for the remaining take-up units 3 based on the information of positional relationship with the reference take-up unit 3 (see e.g., JP 2019 002091 A recited above). In reality, however, the positional relationship between components in the reference take-up unit 3 may be slightly different from the positional relationship between components in another take-up unit 3, due to errors in installation and dimensional errors between the products. Furthermore, in order to optimize the winding conditions in each take-up unit 3, the operator may finely adjust the position of each component in each take-up unit 3. In such cases, the yarn threading to the other take-up units 3 may not be correctly performed even after the correction, and hence the teaching regarding the yarn threading must be done for all take-up units 3 after all.

Under this circumstance, in the present embodiment, the spun yarn take-up system 1 (in particular the yarn threading controller 102) is arranged in the following manner. The yarn threading controller 102 is equivalent to the control unit of the present invention. The yarn threading storage unit 102a is equivalent to the storage unit of the present invention. A combination of the yarn threading robot 4, the yarn threading controller 102, and the yarn threading storage unit 102a is equivalent to the automatic yarn threading device of the present invention.

(Destinations of Leading End Portion of Yarn Threading Unit)

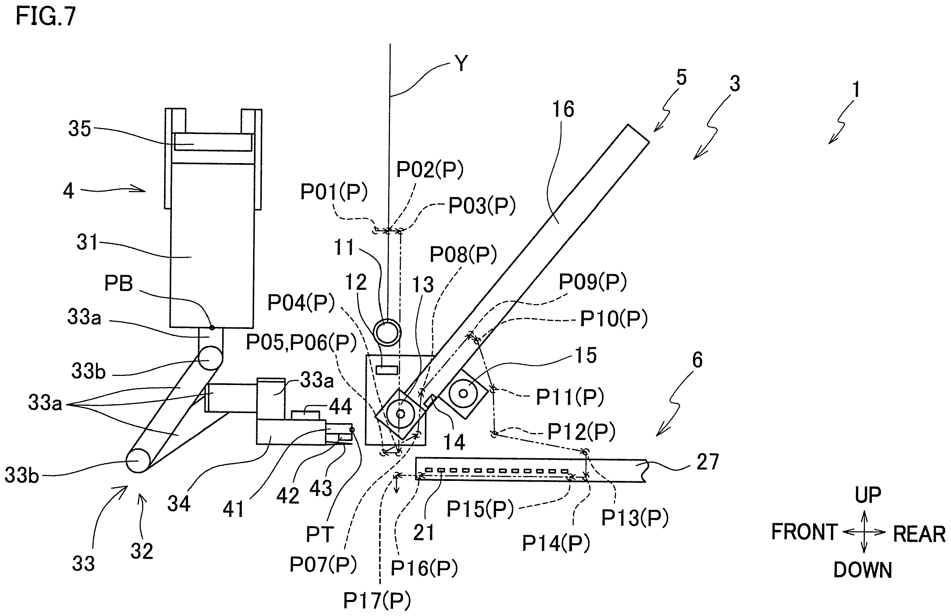

Before detailing the yarn threading controller 102, the destinations of the leading end portion of the yarn threading unit 34 (i.e., points to which the leading end portion moves in a predetermined order) will be described with reference to FIG. 7. In the present embodiment, the leading end portion of the yarn threading unit 34 is, for example, a tool center point (hereinafter, this will be termed as TCP, and is equivalent to a predetermined portion of the present invention) which is a predetermined point of an end effector. The TCP is not limited to a point inside a component constituting the yarn threading unit 34. In other words, a point in a space outside a component may be set as the TCP. Hereinafter, a predetermined point (see a point PT in FIG. 7) at the leading end of the suction 41 of the yarn threading unit 34 is regarded as the TCP for convenience, but the location of the TCP is not limited to this. The TCP is a fixed point relative to the yarn threading unit 34, and moves in accordance with the movement of the yarn threading unit 34.

The yarn threading controller 102 is arranged to be able to control the yarn threading arm 32 so that the TCP is moved to points P (see FIG. 7) in the installation space of the spun yarn take-up system 1 in a predetermined order. For example, when the yarns Y sucked and retained by the aspirator 11 are handed over to the suction 41, the TCP is moved to points P (points P01, P02, and P03) above the aspirator 11 in order. For example, the TCP is moved to a point (point P01) immediately in front of the yarns Y sucked and retained by the aspirator 11, to a point (point P02) when the yarns Y are threaded to the guide 42, and then to a point (point P03) which is a preparation position where the yarns Y are retained by the suction 41 and the TCP waits for the movement to the next yarn threading target.

Similarly, the points P04, P05, and P06 are points for threading the yarns Y to the first regulatory guide 12. In other words, the TCP is moved to a position (point P04) below and behind the first regulatory guide 12, to a point (point P05) which is in front of the point P04 and where the yarns Y are threaded to the first regulatory guide 12, and then to a position (point P06 which is a position shown in FIG. 5(e)) which is to the left of the point P05.

Although not detailed here, similarly, points P07, P08, P09, P10, P11, and P12 are points for threading the yarns Y to the first godet roller 13, the second regulatory guide 14, and the second godet roller 15. In particular, the point P10 is a point to which the TCP is moved when the yarns Y are threaded to the second regulatory guide 14. Points P13, P14, P15, P16, and P17 are points for threading the yarns Y to the fulcrum guides 21. In particular, the point P16 is a point to which the TCP is moved when the yarns Y are threaded to the fulcrum guides 21. The point P08 is a point to which the TCP is moved when the yarns Y are wound onto the first godet roller 13. The point P11 is a point to which the TCP is moved when the yarns Y are wound onto the second godet roller 15.

(Information Stored in Yarn Threading Storage Unit)

Information stored in the yarn threading storage unit 102a will be described. Hereinafter, in regard to later-described information of coordinates, coordinates from a predetermined origin will be referred to as absolute coordinates, whereas coordinates from a predetermined point which is not the origin will be referred to as relative coordinates.

In connection with each take-up unit 3, the yarn threading controller 102 stores a program for moving the TCP to points P in a predetermined order (i.e., to the point P01, then to the point P02, then to the point P03, and so on). For example, when a function of the coordinates (absolute coordinates) of a point P01 regarding a take-up unit 3 is VP01, the TCP is moved to the point P01 as a program including a command for moving the TCP to VP01 is executed. VP01 includes information of coordinates in the front-rear direction, the left-right direction, and the up-down direction. (The same holds true for other coordinates.) The origin in the present embodiment is, for example, a point (PB in FIG. 1 ad FIG. 7) at the base end of the yarn threading arm 32 when the yarn threading robot 4 is positioned immediately in front of the rightmost take-up unit 3 (take-up unit 3A; see FIG. 1). The origin is positionally fixed in the present embodiment. A function of coordinates of plural points P therefore includes information of positions in the left-right direction of the main body 31.

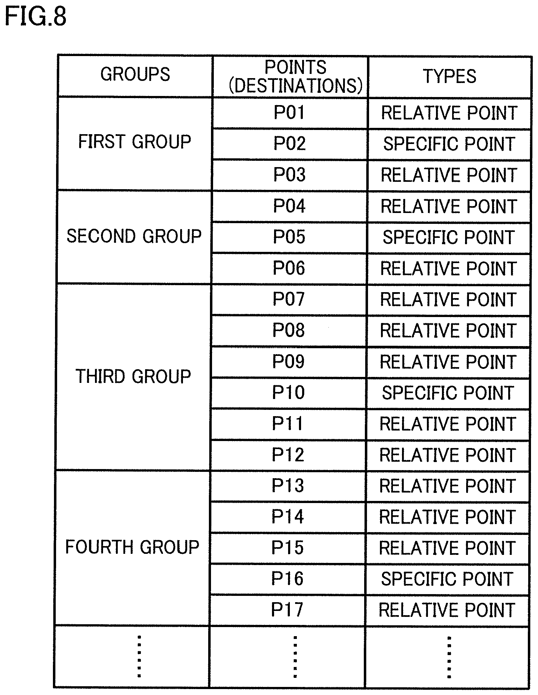

In each take-up unit 3, the points P can be grouped into predetermined groups. This will be specifically explained with reference to FIG. 8. For example, the points P01 to P03 belong to a first group, the points P04 to P06 belong to a second group, the points P07 to P12 belong to a third group, and the points P13 to P17 belong to a fourth group. As such, the points P are grouped in accordance with the order in which the TCP passes through the points in the yarn threading. In other words, the points P belonging to the same group are continuously lined up in the order described above.

The points P may be explicitly grouped (to be, for example, displayed on a display of the teaching pendant 103). The disclosure, however, is not limited to this arrangement. The points P may be, for example, substantially grouped by a program for calculating coordinates, or information for grouping may be stored in the yarn threading storage unit 102a in advance. In other words, "affiliation information" indicating to which one of the groups the points P belong may be stored in the yarn threading storage unit 102a. Such affiliation information may be invariable or may be suitably updated.

As shown in FIG. 8, each point P is classified into (designated as) either a "specific point" or a "relative point". The information of the classification is stored in advance in the yarn threading storage unit 102a, for example. In other words, "classification information" indicating that a point P is classified as a specific point or a relative point may be stored in the yarn threading storage unit 102a. Such classification information may be invariable or may be suitably updated.

Roughly speaking, one specific point is included in each group, and requires an operator to teach the coordinates thereof, when teaching is performed. As a specific example, the point P02 to which the TCP moves when the yarns Y are handed over from the aspirator 11 to the suction 41 is the specific point of the first group. The point P05 to which the TCP moves when the yarns Y are threaded to the first regulatory guide 12 is the specific point of the second group. The point P10 to which the TCP moves when the yarns Y are threaded to the second regulatory guide 14 is the specific point of the third group. The point P16 to which the TCP moves when the yarns Y are threaded to the fulcrum guides 21 is the specific point of the fourth group. In this way, the points P02, P05, P10, and P16 where highly precise position adjustment is required to properly perform the yarn threading are included in the specific points.

A relative point is a point whose information of coordinates can be obtained based on relative coordinates relative to a specific point belonging to the same group as the relative point. The information of relative coordinates (relative coordinates information) can be determined in advance when the system is designed, and is stored in the yarn threading storage unit 102a in advance, for example. As described later, it is unnecessary to teach the coordinates of the relative point in the teaching. For example, information of the points P01 and P03 belonging to the first group can be obtained based on the relative coordinates of the specific point (point P02) belonging to the same first group.

The point P08 to which the TCP moves when the yarns are threaded to the first godet roller 13 and the point P11 to which the TCP moves when the yarns are threaded to the second godet roller 15 are relative points. As described above, the circumferential surface of each of the first godet roller 13 and the second godet roller 15 is substantially flat in the axial direction of each roller. For this reason, even if the position of the TCP is slightly deviated in the axial direction (i.e., even if the control is not as strict as the control performed when the yarns Y are threaded to the first regulatory guide 12, the second regulatory guide 14, and the fulcrum guides 21), the yarns Y are properly threaded. To put it differently, the yarns Y are properly threaded to the first godet roller 13 and the second godet roller 15 without requiring the teaching of the coordinates in a detailed manner.

The yarn threading controller 102 is arranged to calculate coordinates of a specific point in the following manner. As an example, a function of absolute coordinates of a point P02 regarding a take-up unit 3 (e.g., a take-up unit 3B which is the second rightmost take-up unit shown in FIG. 1 and is equivalent to a second yarn processing apparatus of the present invention) is termed VP02. The yarn threading controller 102 uses VP02 as a variable, and as described below, calculates VP02 by using coordinates of a point P02 of a reference take-up unit 3 (e.g., a take-up unit 3A which is equivalent to a first yarn processing apparatus of the present invention), difference information, and adjustment information.

To begin with, a function of coordinates (absolute coordinates) of a point P02 regarding a take-up unit 3A as a reference (hereinafter, this unit may be referred to as reference take-up unit) is termed VP02_STD. A function of absolute coordinates of an installation point (first installation point) of the reference take-up unit 3A is termed CO_STD. The installation point indicates a representative position of the installation of each take-up unit 3. The spun yarn winding system 1 is arranged to be able to obtain actual coordinates of the installation point of each of the take-up member 5 and the winding unit 6. For example, unillustrated markers detectable by the sensor 44 of the yarn threading unit 34 are provided on the upper surface, the side surface, and the front surface of the frame 10 of the take-up member 5 and the upper surface the side surface, and the front surface of the frame 20 (to be more specific, the upper portion 20c, etc.) of the winding unit 6. Based on a result of detection by the sensor 44, the yarn threading controller 102 obtains information of actual coordinates of the installation point. In addition to the above, a function of absolute coordinates of an installation point (second installation point) of another take-up unit 3B (hereinafter, this unit may be referred to as a dependent take-up unit) different from the reference take-up unit 3A is termed CO. The difference between CO and CO_STD is equivalent to information of the difference between the coordinates of the installation point of the reference take-up unit 3A and the coordinates of the installation point of the dependent take-up unit 3B, i.e., difference information. In connection with the calculation of the difference information, either the coordinates of the installation point of the take-up member 5 or the coordinates of the installation point of the winding unit 6 are used. Which coordinates are used is determined in advance depending on to which one of the units, the take-up member 5 and the winding unit 6, each specific point belongs. (For example, the point P02 belongs to the take-up member 5.) The adjustment information is information used for fine adjustment of coordinates in each take-up unit 3 and for each specific point. The adjustment information is input by the operator when the teaching is performed. For example, a function of adjustment information for finely adjusting VP02 is termed VP02_DEV.

The values of VP02_STD, CO_STD, CO, and VP02_DEV are stored in, for example, the yarn threading storage unit 102a. By using the information of the coordinates of the specific point of the reference take-up unit 3A, the difference information, and the adjustment information, the yarn threading controller 102 calculates VP02 regarding the dependent take-up unit 3B based on the following equation (Equation 1). In other words, the yarn threading controller 102 obtains the coordinates of the specific point based on a result of later-described teaching.

(Equation 1)

$$VP02=VP02\_STD+(CO-CO\_STD)+VP02\_DEV$$

The concept of the above-described Equation 1 can be used for calculating coordinates of another specific point regarding the take-up unit 3B and coordinates of a specific point regarding other take-up units 3 (including the take-up unit 3A). In the present embodiment, the yarn threading controller 102 stores a program for always calculating coordinates of each specific point regarding each take-up unit 3. To put it differently, the yarn threading controller 102 performs the calculation of a specific point at least before causing the yarn threading robot 4 to perform yarn threading to each take-up unit 3. Both when the control mode is in the production mode and in the teaching mode, the yarn threading controller 102 performs the calculation described above.

The yarn threading controller 102 is, for example, arranged to obtain coordinates of relative points (points P01 and P03) belonging to the same group as the point P02, based on predetermined relative coordinates relative to the point P02. The numerical value of the relative coordinates is stored in advance in the yarn threading storage unit 102a as a constant, for example. When the numerical value of the relative coordinates of the point P01 relative to the point P02 is RP01, for example, the yarn threading controller 102 calculates the absolute coordinates (hereinafter, VP01) of the point P01 based on the following equation (Equation 2). The same applies to the point P03.

(Equation 2)

$$VP01=VP02+RP01$$

The concept of the above-described Equation 2 can be used for calculating coordinates of another relative point regarding the take-up unit 3B and coordinates of a relative point regarding other take-up units 3 (including the take-up unit 3A). In the present embodiment, the yarn threading controller 102 stores a program for always calculating coordinates of each relative point regarding each take-up unit 3. Both when the control mode is in the production mode and in the teaching mode, the yarn threading controller 102 performs the calculation described above. In this way, the yarn threading controller 102 is able to obtain the information of coordinates of plural points P (the specific points and the relative points) and cause the TCP to move to the points P in a predetermined order.

(Teaching Method for Teaching Yarn Threading Robot)

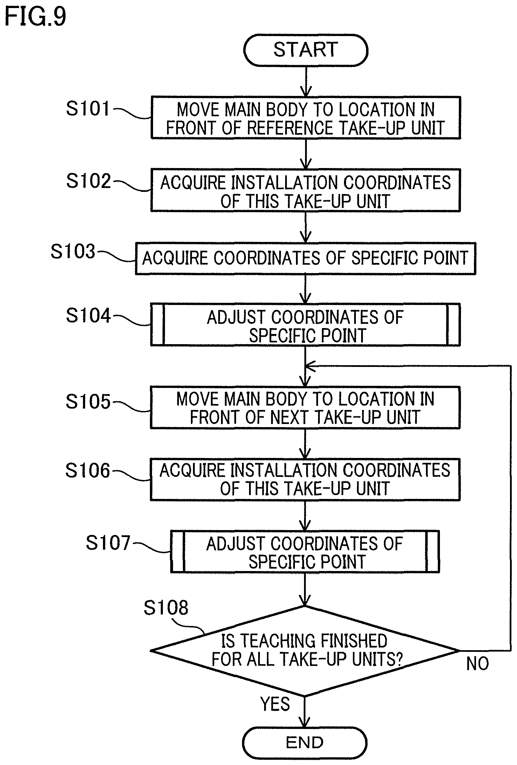

The following will describe a teaching method of teaching the yarn threading robot 4 the operation information of the yarn threading arm 32, with reference to a flow chart shown in FIG. 9. As described below, in the present embodiment, the operator performs the teaching by using the teaching pendant 103. FIG. 9 is a flow chart of an example of a process executed by the yarn threading controller 102 when the machine controller 100 is performing the teaching mode. In the teaching mode, the machine controller 100, the take-up unit controller 101, and the yarn threading controller 102 cooperate with one another and perform control for assisting the teaching for the yarn threading robot 4. In other words, in the present embodiment, the machine controller 100, the take-up unit controller 101, and the yarn threading controller 102 constitute the teaching system used for teaching the yarn threading robot 4. As described below, the teaching system functions as a storage unit, an arm moving unit, a coordinates adjustment facilitation unit, a relative point coordinates calculation unit, and a repetition unit. As described above, the yarn threading controller 102 of the teaching system stores affiliation information, classification information, and relative coordinates information. In this way, the teaching system functions as a storage unit.

When the teaching mode is being executed as a control mode, to begin with, the main body 31 of the yarn threading robot 4 is moved to a location in front of a reference take-up unit 3 (reference take-up unit 3A) (S101). The movement of the main body 31 in the step S101 is, for example, controlled based on the operation of the teaching pendant 103 by the operator. After the start of the teaching mode, prior to the step S101, a screen for prompting the operator to move the main body 31 may be displayed on the teaching pendant 103.

Subsequently, information of absolute coordinates of an installation point (first installation point) of the reference take-up unit 3A is acquired (S102). The acquisition of the coordinates information of the installation point in the step S102 is, for example, performed based on the detection of the installation point by the sensor 44 of the yarn threading unit 34 (see FIG. 2). To be more specific, for example, while operating the yarn threading arm 32 by using the teaching pendant 103, the operator moves the TCP to predetermined positions in order so that the sensor 44 of the yarn threading unit 34 detects a marker (not illustrated) on the frame 10 and a marker (not illustrated) on the frame 20. Based on a result of detection by the sensor 44 (the distance from the sensor 44 to the marker in the present embodiment), the yarn threading controller 102 acquires information of coordinates of the actual installation point of each of the take-up member 5 and the winding unit 6 of the reference take-up unit 3A (as a specific example, acquires the above-described CO_STD). The coordinates (installation coordinates) of the installation point are stored in, for example, the yarn threading storage unit 102a. After the step S101 and before the step S102, a screen prompting the operator to detect the installation points may be displayed on the teaching pendant 103.

After the step S102, the operator operates the yarn threading arm 32 by using the teaching pendant 103 in a state in which the suction 41 does not hold the yarns Y, so as to teach the yarn threading robot 4 the coordinates of only specific points among the points P regarding the reference take-up unit 3A. In other words, the operator teaches the yarn threading robot 4 the above-described VP02_STD, etc. Because the coordinates of the relative points are always calculated based on the coordinates of the specific points by the yarn threading controller 102, the relative points do not need to be taught. At the completion of the step S102, a screen prompting the operator to teach the coordinates of the specific points may be displayed on the teaching pendant 103.

In the next step S103, the coordinates of the specific points taught as described above are acquired. The acquisition of the coordinates in the step S103 is, for example, performed based on the operation of the teaching pendant 103 by the operator. When the coordinates of the specific points is acquired in the step S103, the coordinates of the relative points are immediately updated by a calculation based on the acquired coordinates of the specific points and the relative information stored in advance.

In the next step S104, adjustment is performed to adjust the coordinates of the specific points acquired in the step S103. In the adjustment, the coordinates of the specific points are adjusted to achieve correct yarn threading, while the yarn threading robot 4 is actually performing the yarn threading to the reference take-up unit 3A (detailed will be given later). Because the coordinates of the specific points are always calculated by the yarn threading controller 102, a result of the adjustment in the step S104 is immediately reflected to the coordinates of the specific points. The relative points do not need to be adjusted because the coordinates of the relative points are always calculated by the yarn threading controller 102 and updated to the coordinates acquired based on the coordinates of the specific points after the adjustment. As described above, the teaching regarding the yarn threading to the reference take-up unit 3A is completed.

In the next step S105, the main body 31 of the yarn threading robot 4 is moved to a location in front of the next take-up unit 3 (to be more specific, a dependent take-up unit 3B). The movement of the main body 31 in the step S105 is, for example, controlled based on the operation of the teaching pendant 103 by the operator. After the completion of the step S104 and prior to the S105, a screen for prompting the operator to move the main body 31 to the next dependent take-up unit 3B may be displayed on the teaching pendant 103.

Subsequently, information of the coordinates of an installation point (second installation point) of the dependent take-up unit 3B is acquired (S106). The acquisition of the coordinates information of the installation point in the step S106 is, for example, performed based on the detection of the installation point by the sensor 44 of the yarn threading unit 34 (see FIG. 2), in the same manner as in the step S102 described above. Based on a result of detection by the sensor 44, the yarn threading controller 102 acquires information of the actual installation coordinates of each of the take-up member 5 and the winding unit 6 of the dependent take-up unit 3B (to be more specific, the above-described CO) .

At this stage, the degree of adjustment of the specific points regarding the dependent take-up unit 3B is zero. As described above, the coordinates of the points P (specific points and the relative points) of the dependent take-up unit 3B are always calculated by the yarn threading controller 102 based on the coordinates of the specific points of the reference take-up unit 3A, the difference information, and the adjustment information. In other words, at the completion of the step S106, the coordinates of the specific points regarding the reference take-up unit 3A can be immediately reflected to the coordinates of the specific points regarding the dependent take-up unit 3B. Furthermore, as described above, it is possible to always calculate the coordinates of the relative points based on the coordinates of the specific points.

On this account, in regard to the dependent take-up unit 3B, the coordinates of the specific points and the relative points are immediately updated when the information of the installation coordinates is acquired (S106), with the result that the yarn threading arm 32 moves substantially along the correct track. In other words, in regard to the dependent take-up unit 3B, it is unnecessary to teach the yarn threading robot 4 the coordinates of the specific points and the relative points, in a state in which the suction 41 does not hold the yarns Y.

In the next step S107, adjustment is performed to adjust the coordinates of the specific points of the dependent take-up unit 3B, in the same manner as for the reference take-up unit 3A (S104). In the adjustment in the step S107, the coordinates of the specific points are adjusted to achieve correct yarn threading, while the yarn threading robot 4 is actually performing the yarn threading to the dependent take-up unit 3B (detailed will be given later). As described above, the teaching regarding the yarn threading to the dependent take-up unit 3B is completed.

In addition to the above, for all of the remaining take-up units 3, the above-described steps S105 to S107 are executed (S108). In this way, the teaching for all take-up units 3 regarding the yarn threading is completed.

(Adjustment of Coordinates of Specific Points)

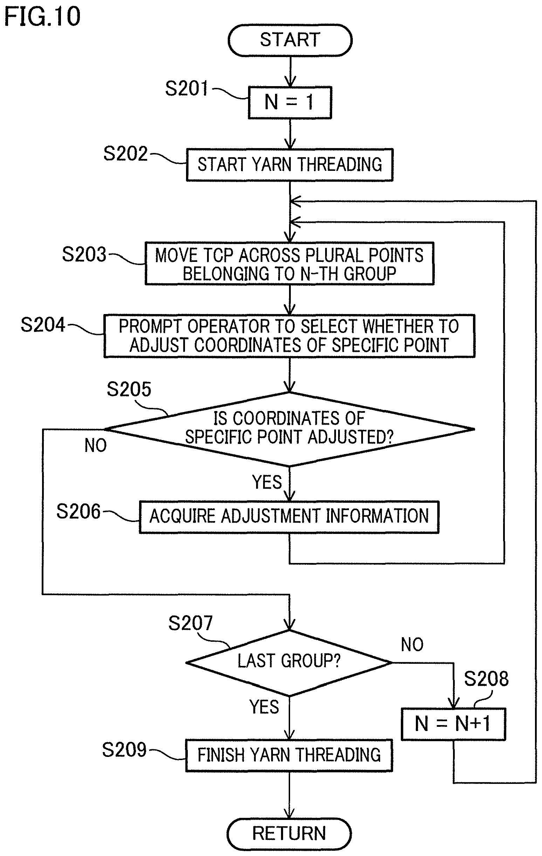

The following will detail the process of the adjustment of the coordinates of the specific points (i.e., the process in common between the steps S104 and 5107 described above), with reference to the flow chart in FIG. 10. In the adjustment shown in FIG. 10, the adjustment of the coordinates of the specific points is performed while the yarn threading robot 4 is actually performing the yarn threading. During the execution of this adjustment, the operator inputs the adjustment information of the specific points belonging to the respective groups. To be more specific, provided that N is an integer, the operator adjusts the coordinates of a specific point belonging to the N-th group by, for example, operating the teaching pendant 103, after moving the TCP to the points P belonging to the N-th group. The number of groups may be clearly specified in the program for adjusting the coordinates. Alternatively, the coordinates of the specific point may be individually adjustable for each group.

At the start of the adjustment, N is set at 1 (S201). Subsequently, the yarn threading actually starts (S202). To be more specific, an instruction is made to the take-up unit controller 101 so that the take-up unit 3 performs operations necessary for the yarn threading, and the yarn threading robot 4 is controlled so that the yarn threading is performed in accordance with the operations of the take-up unit 3.

In the step S203, based on the latest information of the coordinates, the TCP of the yarn threading unit 34 moves to the points belonging to the N-th group (i.e., the group including the N-th specific point) in a predetermined order. To put it differently, for each of the groups, the teaching system moves the TCP of the yarn threading arm 32 so that the TCP passes through all points belonging to the group in a predetermined order. In this way, the teaching system functions as an arm moving unit for moving the yarn threading arm 32.

In the subsequent step S204, the adjustment of the coordinates of the specific point is encouraged after the movement in the step S203. Then whether the adjustment of the coordinates of the specific point will be done is determined in the step S205. For example, in the step S204, the operator is prompted to select whether to perform the adjustment of the coordinates of the specific point belonging to the group. In the step S205, determination is made in accordance with the selection by the operator. To be more specific, in the step S204, options for selecting whether to adjust the coordinates are displayed on a display of the teaching pendant 103. In this way, the teaching system functions as a coordinates adjustment facilitation unit for prompting the adjustment of the coordinates of the specific point. In the step S205, whether it is necessary to adjust the coordinates is determined in accordance with the operator's selection.

When the coordinates of the specific point are adjusted (Yes in S205), adjustment information is acquired (S206). To be more specific, in the step S206, an input column to which the adjustment information is input is displayed on a display of the teaching pendant 103, and the adjustment information is acquired as the operator inputs the information. As described above, the coordinates of each point P is always calculated. The adjustment information acquired in the step S206 is therefore immediately reflected to the coordinates of the specific points and the relative points of the yarn threading arm 32. In this way, the teaching system functions as a relative coordinates information acquisition unit for acquiring coordinates of relative points based on the coordinates of the specific point and the relative coordinates information.

When the coordinates of the specific point are adjusted in this way, the routine goes back to S203, and the TCP is moved uninterruptedly (i.e., without interrupting the yarn threading operation regarding the N-th group) to the points P belonging to the N-th group again, based on the latest coordinates information.

Until the adjustment of the coordinates becomes unnecessary and the coordinates are confirmed (No in S205), the yarn threading regarding the N-th group is repeated. In this way, the yarn threading controller 102 is able to cause the yarn threading arm 32 to repeat the yarn threading for each group, in accordance with an input to the teaching pendant 103 by the operator. In this way, the teaching system functions as a repetition unit for causing the yarn threading arm to repeatedly move.

As the adjustment of the coordinates is completed (No in S205), N is set at N+1 (S208) until the completion of the adjustment of the coordinates of the specific point belonging to the last group (S207), and the routine goes back to S203. As the adjustment of the coordinates of the specific point belonging to the last group is completed (Yes in S207), the yarn threading is completed (S209) and the adjustment of the coordinates of the specific points is completed.

By the teaching described above, the time required for the teaching is significantly shortened to 1/6, as compared to the teaching method in which coordinates of all points P must be taught for the yarn threading robot 4.

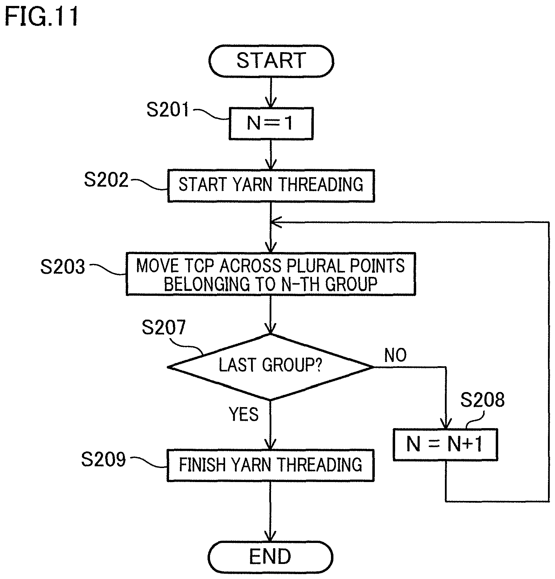

As a reference, when the production mode is being performed, the yarn threading controller 102 moves the yarn threading arm 32 based on the flow chart shown in FIG. 11. In other words, when the production mode is being performed, the yarn threading controller 102 does not execute the above-described S204 to 5206 (display of an option prompting the adjustment to acquisition of adjustment information) and executes S201, S202, S203, 5207, 5208, and 5209, in the yarn threading.

As described above, the time and labor for teaching the yarn threading robot 4 the coordinates of the relative points are reduced, as the coordinates of the specific points are acquired based on a result of teaching and the coordinates of the relative points are acquired based on the relative coordinates determined in advance. To put it differently, it is possible to reduce the number of coordinates to be taught to the yarn threading robot 4. The time and labor required for teaching for the yarn threading robot 4 are therefore reduced.

The points to which the yarn threading arm 32 moves when the yarns Y are threaded to the first regulatory guide 12, the second regulatory guide 14, and the fulcrum guides 21 (yarn threading members) are included in the specific points. It is therefore possible to achieve highly accurate positioning of the yarn threading arm 32 at positions where strict control is required. In regard to positions where strict control is not required, the yarn threading arm 32 is moved based on the relative coordinates. It is therefore possible to reduce the number of coordinates to be taught to the yarn threading robot 4. Meanwhile, when the yarns Y are threaded to the first regulatory guide 12, the second regulatory guide 14, and the fulcrum guides 21, the yarn threading arm 32 is strictly controlled.

When the yarns Y are threaded to the first godet roller 13 and the second godet roller 15, the yarn threading is correctly done without needing strict control as compared to the threading of the yarns Y to the first regulatory guide 12, the second regulatory guide 14, and the fulcrum guides 21. On this account, when the yarns Y are threaded to the first godet roller 13 and the second godet roller 15, the yarn threading arm 32 is moved based on the relative coordinates. It is therefore possible to reduce the number of coordinates to be taught to the yarn threading robot 4.

Furthermore, the coordinates of the specific points regarding the dependent take-up unit 3B, etc. can be roughly acquired by using the coordinates of the specific points regarding the reference take-up unit 3A and the difference information. It is therefore possible to cause the yarn threading arm 32 to move substantially along the correct track from the beginning, when teaching regarding the yarn threading is performed for the dependent take-up unit 3B, etc. For this reason, when teaching regarding the yarn threading is performed for the dependent take-up unit 3B, etc., it is possible to save at least the time and labor for teaching the yarn threading robot 4 the coordinates of the specific points while manually moving the yarn threading arm 32. As described above, it is possible to suppress the increase in time and labor for the teaching in the spun yarn take-up system 1 including the take-up units 3.

In addition to the above, the yarn threading controller 102 calculates the coordinates of the specific points regarding the dependent take-up unit 3B, etc., by using the coordinates of the specific points regarding the reference take-up unit 3A, the difference information, and the adjustment information. It is therefore possible in the teaching to individually confirm the coordinates of each specific point while the yarn threading is being actually performed.

In addition to the above, the yarn threading controller 102 calculates the coordinates of the specific points regarding the take-up unit 3 at least before the yarn threading robot 4 performs the yarn threading to the take-up unit 3. On this account, when the adjustment information is updated, it is possible to immediately reflect the result of the update to the operation of the yarn threading.

In addition to the above, when the coordinates of the specific points are adjusted in the teaching, the operation of the yarn threading can be checked at once for each group. It is therefore possible to shorten the time required for checking the operation in the teaching as compared to a case where each step in the operation of the yarn threading is checked.

In the spun yarn take-up system 1, if, in the teaching, the time to adjust the coordinates of the yarn threading arm 32 is long while the yarn threading robot 4 is actually performing the yarn threading, a large number of the yarns Y are wasted without contributing to the production. In this regard, because in the present embodiment the number of coordinates that the yarn threading robot 4 are taught is reduced, the time for the actual yarn threading is shortened in the teaching. It is therefore possible to reduce the amount of the wasted yarns Y.

The points P belonging to each group are points continuously lined up in a predetermined order. It is therefore possible to, for example, easily manage the information of coordinates as compared to a case where points P belonging to the same group are discontinuous in terms of a predetermined order. When the coordinates of the specific points are adjusted while the yarn threading is being performed for each group in the steps S203 to 5206 shown in FIG. 10, it is possible to confirm the coordinates of the points P through which the TCP successively passes, altogether for each group in good order. The teaching is therefore efficiently performed.

In addition to the above, in the teaching, the coordinates of the specific points can be calculated based on the information of the actual coordinates of the first installation point and the second installation point. It is therefore possible to prevent the yarn threading arm 32 from interfering with other members in the teaching.

The following will describe modifications of the above-described embodiment. The members identical with those in the embodiment above will be denoted by the same reference numerals and the explanations thereof are not repeated.

(1) While in the embodiment above the yarn threading controller 102 is arranged to always calculate the coordinates of the specific points and the coordinates of the relative points, the disclosure is not limited to this arrangement. For example, the yarn threading controller 102 may be arranged to calculate the coordinates only before yarn threading is performed to a take-up unit 3 which is a target of yarn threading.

(2) While in the embodiment above the location of the origin is fixed in regard to the coordinates of the points P (absolute coordinates), the disclosure is not limited to this arrangement. For example, the origin may move in accordance with the movement of the main body 31 of the yarn threading robot 4. In this case, the location information of the main body 31 is not included in the information of the coordinates of the points P.

(3) While in the embodiment above each of the groups includes the relative points, the disclosure is not limited to this arrangement. The relative points may not be included in all groups.

(4) While in the embodiment above the yarn threading controller 102 calculates the coordinates of the relative points as absolute coordinates based on the relative coordinates relative to the specific point, the disclosure is not limited to this arrangement. For example, the yarn threading controller 102 may store a program for moving the TCP to the relative points, including a command with which the relative coordinates relative to the specific point are used as arguments. Control executed by such a program is also equivalent to the control of acquiring the coordinates of the relative points based on the relative coordinates in the present invention. The teaching system storing this program functions as a relative coordinates information acquisition unit for acquiring the coordinates of the relative points based on the coordinates of the specific point and the relative coordinates information of the present invention.

(5) While in the embodiment above a device operated by the operator in the teaching is the teaching pendant 103, the disclosure is not limited to this arrangement. For example, the machine controller 100 may be arranged to receive a selection of whether to adjust the coordinates of the specific points (S203) and an input of the adjustment information (S204). In other words, the operator may perform part of the teaching by operating the machine operation unit 100c, for example.

(6) While in the embodiment above the yarn threading controller 102 uninterruptedly moves the TCP to the points P belonging to one of the groups when the coordinates of the specific point in the teaching are adjusted, the disclosure is not limited to this arrangement. For example, the yarn threading controller 102 may temporarily stop the yarn threading immediately before or after the TCP is moved to the specific point. The yarn threading controller 102 may restart the yarn threading by the yarn threading arm 32 when, for example, the operator operates the teaching pendant 103. Alternatively, the yarn threading controller 102 may cause the yarn threading arm 32 to perform only the movement to the specific point, and prompt the operator to adjust the coordinates of the specific point.

(7) While in the embodiment above the yarn threading controller 102 calculates the coordinates of the specific points both when the control mode is the production mode and when the control node is the teaching mode, the disclosure is not limited to this arrangement. In other words, the yarn threading controller 102 may calculate the coordinates of the specific points by using the coordinates of the specific points of the take-up unit 3A, the difference information, and the adjustment information in the teaching mode, and when the teaching mode is switched to the production mode, the yarn threading controller 102 may store the coordinates of the specific points as constants in the yarn threading storage unit 102a.

(8) While in the embodiment above the yarn threading controller 102 acquires the information of the coordinates of the installation points of both the take-up member 5 and the winding unit 6 based on a result of detection by the sensor 44, the disclosure is not limited to this arrangement. The yarn threading controller 102 may acquire the information of the coordinates of the installation point of only one of the take-up member 5 and the winding unit 6.

(9) While in the embodiment above the yarn threading controller 102 acquires the coordinates of the installation point of each take-up unit 3 based on a result of detection by the sensor 44, the disclosure is not limited to this arrangement. For example, the yarn threading controller 102 may acquire the coordinates of the installation point based on information acquired from images of markers taken by an unillustrated camera. Alternatively, the operator may cause the yarn threading controller 102 to acquire the coordinates of the installation point in the following manner. That is to say, the operator may provide unillustrated protruding portions at the leading end portion of the yarn threading unit 34 and predetermined positions of the take-up unit 3, and move the yarn threading arm 32 by operating the teaching pendant 103 so that the protruding portions make contact with one another. Then the coordinates of the TCP when the protruding portions are in contact with one another may be stored in the yarn threading storage unit 102a as the coordinates of the installation point.

(10) While in the embodiment above the yarn threading controller 102 stores the actual coordinates of the installation point of each take-up unit 3 in the teaching, the disclosure is not limited to this arrangement. In other words, the yarn threading controller 102 may be arranged to calculate the coordinates of the specific points by using the information of the installation coordinates determined when the system is designed. Also with this arrangement, the coordinates of the specific points can be correctly adjusted as the adjustment information is input in the teaching.

(11) While in the embodiment above the coordinates of the specific points of all take-up units 3 are treated as variables, the disclosure is not limited to this arrangement. For example, the yarn threading controller 102 may be arranged to store the coordinates of the specific points of the take-up unit 3A as constants. Alternatively, the yarn threading controller 102 may be arranged to store the coordinates of the specific points of all take-up units 3 as constants. Also with these arrangements, the time and labor of the teaching are reduced as compared to a case where the coordinates of all points P must be taught to the yarn threading robot.

(12) The processes executed by the yarn threading controller 102 in the embodiment above may be partially executed by the machine controller 100, for example. For example, the machine controller 100 may acquire the installation coordinates based on a result of detection by the sensor 44 in the teaching. In this case, the machine controller 100 is also included in the control unit of the present invention. Furthermore, part of information stored in the yarn threading storage unit 102a may be stored in the machine storage unit 100a. For example, the above-described information of VP02_STD, CO_STD, CO, and VP02_DEV may be stored in the machine storage unit 100a. Furthermore or alternatively, the information of the relative coordinates of the relative points may be stored in the machine storage unit 100a. In this case, the machine storage unit 100a is also included in the storage unit of the present invention. Alternatively, the machine controller 100 may control the yarn threading robot 4 in place of the yarn threading controller 102. In this case, the machine controller 100 is equivalent to the control unit of the present invention and the machine storage unit 100a is equivalent to the storage unit of the present invention. Alternatively, similar processes may be executed by, for example, the take-up unit controller 101. While the teaching system described above is constituted by the machine controller 100, the take-up unit controller 101, and the yarn threading controller 102, the disclosure is not limited to this arrangement. The teaching system may be constituted by at least one of the machine controller 100, the take-up unit controller 101, or the yarn threading controller 102.

(13) While in the embodiment above the point P08 to which the TCP is moved when the yarns are threaded to the first godet roller 13 and the point P11 to which the TCP is moved when the yarns Y are threaded to the second godet roller 15 are relative points, the disclosure is not limited to this arrangement. These points may be specific points.

(14) While in the embodiment above a point to which the TCP is moved when the yarns Y are threaded to a yarn threading member such as the first regulatory guide 12 is a specific point, the disclosure is not limited to this arrangement. Another point may be a specific point. For example, a point where the TCP is required to position immediately before the yarns Y are threaded to the yarn threading member may be a specific point.

(15) While in the embodiment above the spun yarn take-up system 1 includes plural take-up units 3, the disclosure is not limited to this arrangement. Only one take-up unit 3 may be included.

(16) While in the embodiment above the teaching of the coordinates of the specific points performed by the operator between the steps S102 and S103 in FIG. 9 is remote teaching with which the yarn threading arm 32 is remotely controlled by using the teaching pendant 103, the teaching may be direct teaching with which the yarn threading arm 32 is manually and directly moved.

(17) While in the embodiment above the yarn threading storage unit 102a may store "affiliation information" and "classification information", the disclosure is not limited to this arrangement. The yarn threading storage unit 102a may not store these sets of information.

(18) While in the embodiment above only one specific point is included in each group, the disclosure is not limited to this arrangement. Each group may include two or more specific points whose information of coordinates is acquired based on a result of teaching. In this case, a group includes at least one specific point. When there are plural specific points in each group, in the step S206 described above, an input column is displayed for each specific point and adjustment information is acquired for each specific point. In a group including plural specific points, the specific points may have the relation of master and servant. In such a case, coordinates of a servant specific point may be calculated based on the coordinates of a master specific point, predetermined relative coordinates regarding the master specific point, and the above-described adjustment information. The information of the coordinates of each relative point may be acquired based on the information of the coordinates of the master specific point and the relative coordinates information, or acquired based on the information of the coordinates of the servant specific point and the relative coordinates information. The information regarding on which information of coordinates of a specific point the acquisition of the relative coordinates information is based may be stored, for example, in the yarn threading storage unit 102a in advance. In this case, the correspondence between relative points and the specific point may be permanent or may be suitably updated.

(19) The present invention is not limited to the spun yarn take-up system 1 taking up spun yarns. The present invention is applicable to various types of yarn processing systems including yarn processing apparatuses for yarn processing and yarn threading robots for yarn threading.

**Claims**

1. A yarn processing system (1) comprising:

   at least one yarn processing apparatus (3) which is configured to process a yarn (Y);

a yarn threading robot (4) which includes a yarn threading arm (32) and is configured to perform yarn threading to the at least one yarn processing apparatus (3) by using the yarn threading arm (32);

a storage unit (102a) which is able to store information regarding coordinates of points (P) to which a predetermined part of the yarn threading arm (32) is moved in a predetermined order when the yarn threading to the at least one yarn processing apparatus (3) is performed; and

a control unit (102) which is configured to cause the yarn threading robot (4) to perform the yarn threading based on the information regarding the coordinates of the points (P),

the points being grouped into predetermined groups,

the control unit (102) acquiring coordinates of a specific point based on a result of teaching regarding the yarn threading, each of the predetermined groups including at least one specific point, and

the control unit (102) acquiring coordinates of a relative point which is different from the at least one specific point, based on predetermined relative coordinates relative to the coordinates of the specific point belonging to the same group as the relative point.

2. The yarn processing system (1) according to claim 1, wherein,

the at least one yarn processing apparatus (3) includes a yarn threading member (12, 14, 21) to which the yarn (Y) is threaded, and

the at least one specific point includes a point to which the predetermined part of the yarn threading arm (32) is moved when the yarn (Y) is threaded to the yarn threading member (12, 14, 21).

3. The yarn processing system (1) according to claim 2, wherein, the yarn threading member (12, 14, 21) includes a yarn guide (21) that guides the yarn (Y) to a downstream side in a running direction of the running yarn (Y) .

4. The yarn processing system (1) according to claim 2 or 3, wherein,

the at least one yarn processing apparatus (3) is configured to be able to simultaneously process plural yarns (Y), and

the yarn threading member (12, 14, 21) includes a regulatory guide (12, 14) that regulates intervals of the yarns (Y) neighboring to one another.

5. The yarn processing system (1) according to any one of claims 1 to 4, wherein,

the at least one yarn processing apparatus (3) includes a yarn feed roller (13, 15) by which the yarn (Y) is fed to the downstream side in the running direction of the running yarn (Y), and

the relative point includes a point to which the predetermined part of the yarn threading arm (32) is moved when the yarn (Y) is threaded to the yarn feed roller (13, 15) .

6. The yarn processing system (1) according to any one of claims 1 to 5, further comprising, as the at least one yarn processing apparatus (3), a first yarn processing apparatus (3A) and a second yarn processing apparatus (3B) different from the first yarn processing apparatus (3A),

the storage unit (102a) being capable of storing coordinates of a predetermined first installation point of the first yarn processing apparatus (3A) and coordinates of a predetermined second installation point of the second yarn processing apparatus (3B),

the control unit (102) being capable of treating the coordinates of a plurality of the at least one specific point as variables, and

the control unit (102) calculating the coordinates of the specific points regarding the second yarn processing apparatus (3B) by using coordinates of the specific points regarding the first yarn processing apparatus (3A) and difference information which is information of a difference between the coordinates of the first installation point and the coordinates of the second installation point.

7. The yarn processing system (1) according to claim 6, wherein,

the storage unit (102a) is capable of storing adjustment information which is different from the difference information and is used for individually adjusting the coordinates of each of the specific points, and

the control unit (102) calculates the coordinates of the specific points regarding the second yarn processing apparatus (3B) by using the coordinates of the specific points regarding the first yarn processing apparatus (3A), the difference information, and the adjustment information.

8.  The yarn processing system (1) according to claim 7, wherein, the control unit (102) calculates the coordinates of the specific points regarding the second yarn processing apparatus (3B) at least before the yarn threading robot (4) performs the yarn threading to the second yarn processing apparatus (3B).

9.  The yarn processing system (1) according to any one of claims 1 to 8, wherein,

    when a teaching mode which is a control mode for performing the teaching is being executed,
    at a time of adjustment of the coordinates of one of the specific points, the control unit (102) is able to uninterruptedly move the predetermined part of the yarn threading arm (32) in the predetermined order to the points belonging to one of the groups including that one of the specific points.

10. The yarn processing system (1) according to any one of claims 1 to 9, wherein,

    the at least one yarn processing apparatus (3) is a take-up unit (3) configured to take-up the yarn (Y) spun out from a spinning apparatus (2) and wind the yarn (Y) onto a bobbin (B), and
    the yarn threading robot (4) is configured to perform the yarn threading to the take-up unit (3) while sucking and retaining the yarn (Y).

11. An automatic yarn threading device (4, 102, 102a) comprising:

    a yarn threading robot (4) which includes a yarn threading arm (32) and is configured to perform yarn threading to a yarn processing apparatus (3) by using the yarn threading arm (32);
    a storage unit (102a) which is able to store information regarding coordinates of points (P) to which a predetermined part of the yarn threading arm (32) is moved in a predetermined order when the yarn threading to the yarn processing apparatus (3) is performed; and
    a control unit (102) which is configured to cause the yarn threading robot (4) to perform the yarn threading based on the information regarding the coordinates of the points,
    the points being grouped into predetermined groups,
    the control unit (102) acquiring coordinates of a specific point based on a result of teaching regarding the yarn threading, each of the predetermined groups including at least one specific point, and
    the control unit (102) acquiring coordinates of a relative point which is different from the at least one specific point, based on predetermined relative coordinates relate to the coordinates of the specific point belonging to the same group as the relative point.

12. The automatic yarn threading device (4, 102, 102a) according to claim 11, wherein, the points (P) belonging to each of the groups are points successively aligned in the predetermined order.

13. A teaching method of teaching the yarn threading robot (4) information regarding an operation of the yarn threading arm (32) in the yarn threading in the yarn processing system (1) according to one of claims 1 to 10, coordinates of only the specific points among the points (P) being taught to the yarn threading robot (4).

14. A teaching system (100, 101, 102) for teaching a yarn threading robot (4) including a yarn threading arm (32) for performing yarn threading to a yarn processing apparatus (3) coordinates of points (P) through which a predetermined part of the yarn threading arm (32) passes in a predetermined order when the yarn threading is performed, the teaching system (100, 101, 102) comprising:

    a storage unit which stores affiliation information indicating that the points (P) belong to groups, classification information in which at least one of the points belonging to each of the groups is specified as a specific point whereas the remaining points are specified as relative points, and relative coordinates information in which relative coordinates relative to the specific point belonging to the same group as the relative points are defined;
    an arm moving unit which is configured to move, for each of the groups, the predetermined part of the yarn threading arm (32) to pass through all points belonging to each of the groups in the predetermined order;
    a coordinates adjustment facilitation unit which is configured to facilitate adjustment of the coordinates of the specific point after the arm moving unit moves the yarn threading arm (32) for each of the groups;
    a relative coordinates information acquisition unit which is configured to acquire coordinates of the relative points based on the adjusted coordinates of the specific point and the relative coordinates information; and

a repetition unit which is configured to repeat movement of the yarn threading arm (32) by the arm moving unit performed for each of the groups, until the coordinates of all points belonging to each of the groups are confirmed.

**Patentansprüche**

1. Garnverarbeitungssystem (1), umfassend:

   mindestens eine Garnverarbeitungseinrichtung (3), die konfiguriert ist, um ein Garn (Y) zu verarbeiten;
   einen Garneinfädelungsroboter (4), der einen Garneinfädelungsarm (32) beinhaltet und konfiguriert ist, um Garneinfädeln an der mindestens einen Garnverarbeitungseinrichtung (3) durch Verwenden des Garneinfädelungsarms (32) durchzuführen;
   eine Speichereinheit (102a), die fähig ist, Informationen hinsichtlich Koordinaten von Punkten (P) zu speichern, zu denen ein vorbestimmter Teil des Garneinfädelungsarms (32) in einer vorbestimmten Reihenfolge bewegt wird, wenn das Garneinfädeln an der mindestens einen Garnverarbeitungseinrichtung (3) durchgeführt wird; und
   eine Steuereinheit (102), die konfiguriert ist, um zu bewirken, dass der Garneinfädelungsroboter (4) das Garneinfädeln auf Grundlage der Informationen hinsichtlich der Koordinaten der Punkte (P) durchführt,
   wobei die Punkte in vorbestimmte Gruppen gruppiert sind,
   wobei die Steuereinheit (102) Koordinaten eines spezifischen Punkts auf Grundlage eines Lehrergebnisses hinsichtlich des Garneinfädelns bezieht, wobei jede der vorbestimmten Gruppen mindestens einen spezifischen Punkt beinhaltet, und
   wobei die Steuereinheit (102) Koordinaten eines relativen Punkts bezieht, der sich von dem mindestens einen spezifischen Punkt unterscheidet, auf Grundlage dessen, dass vorbestimmte relative Koordinaten relativ zu den Koordinaten des spezifischen Punkts der gleichen Gruppe angehören wie der relative Punkt.

2. Garnverarbeitungssystem (1) nach Anspruch 1, wobei

   die mindestens eine Garnverarbeitungseinrichtung (3) ein Garneinfädelungselement (12, 14, 21) beinhaltet, in das das Garn (Y) eingefädelt wird, und
   der mindestens eine spezifische Punkt einen Punkt beinhaltet, zu dem der vorbestimmte Teil des Garneinfädelungsarms (32) bewegt wird, wenn das Garn (Y) in das Garneinfädelungselement (12, 14, 21) eingefädelt wird.

3. Garnverarbeitungssystem (1) nach Anspruch 2, wobei das Garneinfädelungselement (12, 14, 21) eine Garnführung (21) beinhaltet, die das Garn (Y) in einer Laufrichtung des laufenden Garns (Y) zu einer stromabwärtigen Seite führt.

4. Garnverarbeitungssystem (1) nach Anspruch 2 oder 3, wobei

   die mindestens eine Garnverarbeitungseinrichtung (3) konfiguriert ist, um fähig zu sein, gleichzeitig mehrere Garne (Y) zu verarbeiten, und
   das Garneinfädelungselement (12, 14, 21) eine regelnde Führung (12, 14) beinhaltet, die Intervalle der Garne (Y), die zueinander benachbart sein, regelt.

5. Garnverarbeitungssystem (1) nach einem der Ansprüche 1 bis 4, wobei

   die mindestens eine Garnverarbeitungseinrichtung (3) eine Garnzufuhrrolle (13, 15) beinhaltet, über die das Garn (Y) in der Laufrichtung des laufenden Garns (Y) der stromabwärtigen Seite zugeführt wird, und
   der relative Punkt einen Punkt beinhaltet, zu dem der vorbestimmte Teil des Garneinfädelungsarms (32) bewegt wird, wenn das Garn (Y) in die Garnzufuhrrolle (13, 15) eingefädelt wird.

6. Garnverarbeitungssystem (1) nach einem der Ansprüche 1 bis 5, weiter umfassend, als die mindestens eine Garnverarbeitungseinrichtung (3), eine erste Garnverarbeitungseinrichtung (3A) und eine zweite Garnverarbeitungseinrichtung (3B), die sich von der ersten Garnverarbeitungseinrichtung (3A) unterscheidet,

   wobei die Speichereinheit (102a) fähig ist, Koordinaten eines vorbestimmten ersten Installationspunkts der ersten Garnverarbeitungseinrichtung (3A) und Koordinaten eines vorbestimmten zweiten Installationspunkts der zweiten Garnverarbeitungseinrichtung (3B) zu speichern,
   wobei die Steuereinheit (102) fähig ist, die Koordinaten einer Vielzahl des mindestens einen spezifischen Punkts als Variablen zu behandeln, und

wobei die Steuereinheit (102) die Koordinaten der spezifischen Punkte hinsichtlich der zweiten Garnverarbeitungseinrichtung (3B) durch Verwenden von Koordinaten der spezifischen Punkte hinsichtlich der ersten Garnverarbeitungseinrichtung (3A) und von Differenzinformationen, die Informationen über eine Differenz zwischen den Koordinaten des ersten Installationspunkts und den Koordinaten des zwischen Installationspunkts sind, berechnet.

7. Garnverarbeitungssystem (1) nach Anspruch 6, wobei

die Speichereinheit (102a) fähig ist, Anpassungsinformationen zu speichern, die sich von den Differenzinformationen unterscheiden und zum individuellen Anpassen der Koordinaten jedes der spezifischen Punkte verwendet werden, und
die Steuereinheit (102) die Koordinaten der spezifischen Punkte hinsichtlich der zweiten Garnverarbeitungseinrichtung (3B) durch Verwenden der Koordinaten der spezifischen Punkte hinsichtlich der ersten Garnverarbeitungseinrichtung (3A), der Differenzinformationen und der Anpassungsinformationen berechnet.

8. Garnverarbeitungssystem (1) nach Anspruch 7, wobei die Steuereinheit (102) die Koordinaten der spezifischen Punkte hinsichtlich der zweiten Garnverarbeitungseinrichtung (3B) mindestens, bevor der Garneinfädelungsroboter (4) das Garneinfädeln an der zweiten Garnverarbeitungseinrichtung (3B) durchführt, berechnet.

9. Garnverarbeitungssystem (1) nach einem der Ansprüche 1 bis 8, wobei

wenn ein Lehrmodus ausgeführt wird, der ein Steuermodus zum Durchführen des Lehrens ist,
zu einem Zeitpunkt einer Anpassung der Koordinaten eines der spezifischen Punkte die Steuereinheit (102) fähig ist, den vorbestimmten Teil des Garneinfädelungsarms (32) fortlaufend in der vorbestimmten Reihenfolge zu den Punkten zu bewegen, die einer der Gruppen angehören, die den einen der spezifischen Punkte beinhalten.

10. Garnverarbeitungssystem (1) nach einem der Ansprüche 1 bis 9, wobei

die mindestens eine Garnverarbeitungseinrichtung (3) eine Aufgreifeinheit (3) ist, die konfiguriert ist, um das aus der Spinneinrichtung (2) ausgesponnene Garn (Y) aufzugreifen und das Garn (Y) auf eine Spule (B) zu wickeln, und
der Garneinfädelungsroboter (4) konfiguriert ist, um das Garneinfädeln an der Aufgreifeinheit (3) durchzuführen, während er das Garn (Y) ansaugt und hält.

11. Automatische Garneinfädelungsvorrichtung (4, 102, 102a), umfassend:

einen Garneinfädelungsroboter (4), der einen Garneinfädelungsarm (32) beinhaltet und konfiguriert ist, um Garneinfädeln an einer Garnverarbeitungseinrichtung (3) durch Verwenden des Garneinfädelungsarms (32) durchzuführen;
eine Speichereinheit (102a), die fähig ist, Informationen hinsichtlich Koordinaten von Punkten (P) zu speichern, zu denen ein vorbestimmter Teil des Garneinfädelungsarms (32) in einer vorbestimmten Reihenfolge bewegt wird, wenn das Garneinfädeln an der Garnverarbeitungseinrichtung (3) durchgeführt wird; und
eine Steuereinheit (102), die konfiguriert ist, um zu bewirken, dass der Garneinfädelungsroboter (4) das Garneinfädeln auf Grundlage der Informationen hinsichtlich der Koordinaten der Punkte durchführt,
wobei die Punkte in vorbestimmte Gruppen gruppiert sind,
wobei die Steuereinheit (102) Koordinaten eines spezifischen Punkts auf Grundlage eines Lehrergebnisses hinsichtlich des Garneinfädelns bezieht, wobei jede der vorbestimmten Gruppen mindestens einen spezifischen Punkt beinhaltet, und
wobei die Steuereinheit (102) Koordinaten eines relativen Punkts bezieht, der sich von dem mindestens einen spezifischen Punkt unterscheidet, auf Grundlage dessen, dass vorbestimmte relative Koordinaten sich auf die Koordinaten des spezifischen Punkts beziehen, der der gleichen Gruppe angehört wie der relative Punkt.

12. Automatische Garneinfädelungsvorrichtung (4, 102, 102a) nach Anspruch 11, wobei die Punkte (P), die jeder der Gruppen angehören, Punkte sind, die sukzessiv in der vorbestimmten Reihenfolge ausgerichtet werden.

13. Lehrverfahren, um dem Garneinfädelungsroboter (4) Informationen hinsichtlich eines Vorgangs des Garneinfädelungsarms (32) in dem Garneinfädeln in dem Garnverarbeitungssystem (1) nach einem der Ansprüche 1 bis 10 zu lehren, wobei dem Garneinfädelungsroboter (4) Koordinaten nur der spezifischen Punkte aus den Punkten (P) gelehrt werden.

14. Lehrsystem (100, 101, 102), um einem Garneinfädelungsroboter (4), der einen Garneinfädelungsarm (32) zum Durchführen von Garneinfädeln an einer Garnverarbeitungseinrichtung (3) beinhaltet, Koordinaten von Punkten (P) zu lehren, durch die ein vorbestimmter Teil des Garneinfädelungsarms (32) in einer vorbestimmten Reihenfolge hindurchgeht, wenn das Garneinfädeln durchgeführt wird, wobei das Lehrsystem (100, 101, 102) umfasst:

eine Speichereinheit, die Zugehörigkeitsinformationen speichert, die angeben, dass die Punkte (P) Gruppen angehören, Klassifizierungsinformationen, in denen mindestens einer der Punkte, der jeder der Gruppen angehört, als ein spezifischer Punkt spezifiziert wird, wohingegen die übrigen Punkte als relative Punkte spezifiziert werden, und Informationen relativer Koordinaten, in denen relative Koordinaten relativ zu dem spezifischen Punkt, der der gleichen Gruppe angehört, als die relativen Punkte definiert werden;

eine Armbewegungseinheit, die konfiguriert ist, um den vorbestimmten Teil des Garneinfädelungsarms (32) für jede der Gruppen so zu bewegen, dass er durch alle Punkte, die jeder der Gruppen angehören, in der vorbestimmten Reihenfolge hindurchgeht;

eine Koordinatenanpassungserleichterungseinheit, die konfiguriert ist, um Anpassung der Koordinaten des spezifischen Punkts, nachdem die Armbewegungseinheit den Garneinfädelungsarm (32) bewegt, für jede der Gruppen zu erleichtern;

eine Bezugseinheit für Informationen relativer Koordinaten, die konfiguriert ist, um Koordinaten der relativen Punkte auf Grundlage der angepassten Koordinaten des spezifischen Punkts und der Informationen relativer Koordinaten zu beziehen; und

eine Wiederholungseinheit, die konfiguriert ist, um Bewegung des Garneinfädelungsarms (32) durch die Armbewegungseinheit, die für jede der Gruppen durchgeführt wird, zu wiederholen, bis die Koordinaten aller Punkte, die jeder der Gruppen angehören, bestätigt sind.


## Revendications

1. Système de traitement de fil (1), comprenant :

au moins un appareil de traitement de fil (3) qui est configuré pour traiter un fil (Y) ;
un robot d'enfilage de fil (4) qui inclut un bras d'enfilage de fil (32) et est configuré pour réaliser un enfilage de fil sur le au moins un appareil de traitement de fil (3) par l'utilisation du bras d'enfilage de fil (32) ;
une unité de stockage (102a) qui est apte à stocker des informations relatives à des coordonnées de points (P) auxquels une partie prédéterminée du bras d'enfilage de fil (32) est déplacée dans un ordre prédéterminé lorsque l'enfilage de fil sur le au moins un appareil de traitement de fil (3) est réalisé ; et
une unité de commande (102) qui est configurée pour amener le robot d'enfilage de fil (4) à réaliser l'enfilage de fil sur la base des informations relatives aux coordonnées des points (P),
les points étant regroupés en groupes prédéterminés,
l'unité de commande (102) acquérant des coordonnées d'un point spécifique sur la base d'un résultat d'un enseignement relatif à l'enfilage de fil, chacun des groupes prédéterminés incluant au moins un point spécifique, et
l'unité de commande (102) acquérant des coordonnées d'un point relatif qui est différent de le au moins un point spécifique, sur la base de coordonnées relatives prédéterminées par rapport aux coordonnées du point spécifique appartenant au même groupe que le point relatif.

2. Système de traitement de fil (1) selon la revendication 1, dans lequel,

l'au moins un appareil de traitement de fil (3) inclut un élément d'enfilage de fil (12, 14, 21) sur lequel le fil (Y) est enfilé, et
l'au moins un point spécifique inclut un point auquel la partie prédéterminée du bras d'enfilage de fil (32) est déplacée lorsque le fil (Y) est enfilé sur l'élément d'enfilage de fil (12, 14, 21).

3. Système de traitement de fil (1) selon la revendication 2, dans lequel l'élément d'enfilage de fil (12, 14, 21) inclut un guide de fil (21) qui guide le fil (Y) vers un côté en aval dans une direction de déplacement du fil (Y) se déplaçant.

4. Système de traitement de fil (1) selon la revendication 2 ou 3, dans lequel,

l'au moins un appareil de traitement de fil (3) est configuré pour pouvoir traiter simultanément plusieurs fils (Y), et l'élément d'enfilage de fil (12, 14, 21) inclut un guide régulateur (12, 14) qui régule des intervalles des fils (Y) voisins les uns des autres.

5. Système de traitement de fil (1) selon l'une quelconque des revendications 1 à 4, dans lequel,

l'au moins un appareil de traitement de fil (3) inclut un rouleau d'alimentation en fil (13, 15) par lequel le fil (Y) est alimenté vers le côté en aval dans la direction de déplacement du fil (Y) se déplaçant, et
le point relatif inclut un point auquel la partie prédéterminée du bras d'enfilage de fil (32) est déplacée lorsque le fil (Y) est enfilé sur le rouleau d'alimentation en fil (13, 15).

6. Système de traitement de fil (1) selon l'une quelconque des revendications 1 à 5, comprenant en outre, en tant que l'au moins un appareil de traitement de fil (3), un premier appareil de traitement de fil (3A) et un second appareil de traitement de fil (3B) différent du premier appareil de traitement de fil (3A),

l'unité de stockage (102a) étant capable de stocker des coordonnées d'un premier point d'installation prédéterminé du premier appareil de traitement de fil (3A) et des coordonnées d'un second point d'installation prédéterminé du second appareil de traitement de fil (3B),
l'unité de commande (102) étant capable de traiter les coordonnées d'une pluralité de l'au moins un point spécifique en tant que variables, et
l'unité de commande (102) calculant les coordonnées des points spécifiques en ce qui concerne le second appareil de traitement de fil (3B) par l'utilisation de coordonnées des points spécifiques en ce qui concerne le premier appareil de traitement de fil (3A) et des informations de différence qui sont des informations d'une différence entre les coordonnées du premier point d'installation et les coordonnées du second point d'installation.

7. Système de traitement de fil (1) selon la revendication 6, dans lequel,

l'unité de stockage (102a) est capable de stocker des informations d'ajustements qui sont différentes des informations de différence et qui sont utilisées pour ajuster individuellement les coordonnées de chacun des points spécifiques, et
l'unité de commande (102) calcule les coordonnées des points spécifiques en ce qui concerne le second appareil de traitement de fil (3B) par l'utilisation des coordonnées des points spécifiques en ce qui concerne le premier appareil de traitement de fil (3A), des informations de différence, et des informations d'ajustement.

8. Système de traitement de fil (1) selon la revendication 7, dans lequel l'unité de commande (102) calcule les coordonnées des points spécifiques en ce qui concerne le second appareil de traitement de fil (3B) au moins avant que le robot d'enfilage de fil (4) réalise l'enfilage de fil sur le second appareil de traitement de fil (3B).

9. Système de traitement de fil (1) selon l'une quelconque des revendications 1 à 8, dans lequel,

lorsqu'un mode d'enseignement qui est un mode de commande pour réaliser l'enseignement est en cours d'exécution,
à un temps d'ajustement des coordonnées de l'un des points spécifiques, l'unité de commande (102) est apte à déplacer sans interruption la partie prédéterminée du bras d'enfilage de fil (32) dans l'ordre prédéterminé jusqu'au point appartenant à l'un des groupes incluant ce point parmi les points spécifiques.

10. Système de traitement de fil (1) selon l'une quelconque des revendications 1 à 9, dans lequel,

l'au moins un appareil de traitement de fil (3) est une unité de prise (3) configurée pour prendre le fil (Y) déroulé d'un appareil de filage (2) et enrouler le fil (Y) sur une bobine (B), et
le robot d'enfilage de fil (4) est configuré pour réaliser l'enfilage de fil sur l'unité de prise (3) en aspirant et en retenant le fil (Y).

11. Dispositif d'enfilage de fil automatique (4, 102, 102a) comprenant :

un robot d'enfilage de fil (4) qui inclut un bras d'enfilage de fil (32) et est configuré pour réaliser un enfilage de fil sur un appareil de traitement de fil (3) par l'utilisation du bras d'enfilage de fil (32) ;
une unité de stockage (102a) qui est apte à stocker des informations relatives à des coordonnées de points (P) auxquels une partie prédéterminée du bras d'enfilage de fil (32) est déplacée dans un ordre prédéterminé lorsque l'enfilage de fil sur l'appareil de traitement de fil (3) est réalisé ; et

une unité de commande (102) qui est configurée pour amener le robot d'enfilage de fil (4) à réaliser l'enfilage de fil sur la base des informations relatives aux coordonnées des points,

les points étant regroupés en groupes prédéterminés,

l'unité de commande (102) acquérant des coordonnées d'un point spécifique sur la base d'un résultat d'un enseignement relatif à l'enfilage de fil, chacun des groupes prédéterminés incluant au moins un point spécifique, et

l'unité de commande (102) acquérant des coordonnées d'un point relatif qui est différent de le au moins un point spécifique, sur la base de coordonnées relatives prédéterminées par rapport aux coordonnées du point spécifique appartenant au même groupe que le point relatif.

12. Dispositif d'enfilage de fil automatique (4, 102, 102a) selon la revendication 11, dans lequel les points (P) appartenant à chacun des groupes sont des points successivement alignés dans l'ordre prédéterminé.

13. Procédé d'enseignement pour enseigner au robot d'enfilage de fil (4) des informations relatives à un fonctionnement du bras d'enfilage de fil (32) dans l'enfilage de fil dans le système de traitement de fil (1) selon l'une des revendications 1 à 10, des coordonnées uniquement des points spécifiques parmi les points (P) étant enseignées au robot d'enfilage de fil (4).

14. Système d'enseignement (100, 101, 102) pour enseigner, à un robot d'enfilage de fil (4) incluant un bras d'enfilage de fil (32) pour réaliser un enfilage de fil sur un appareil de traitement de fil (3), des coordonnées de points (P) à travers lesquels passent une partie prédéterminée du bras d'enfilage de fil (32) dans un ordre prédéterminé lorsque l'enfilage de filet est réalisé, le système d'enseignement (100, 101, 102) comprenant :

une unité de stockage qui stocke des informations d'affiliation indiquant que les points (P) appartiennent à des groupes, des informations de classification dans lesquelles au moins l'un des points appartenant à chacun des groupes est spécifié en tant qu'un point spécifique tandis que les points restants sont spécifiés en tant que points relatifs, et des informations de coordonnées relatives dans lesquelles des coordonnées relatives en ce qui concerne le point spécifique appartenant au même groupe que les points relatifs sont définies ;

une unité de déplacement de bras qui est configurée pour déplacer, pour chacun des groupes, la partie prédéterminée du bras d'enfilage de fil (32) pour passer à travers tous les points appartenant à chacun des groupes dans l'ordre prédéterminé ;

une unité de facilitation d'ajustement de coordonnée qui est configurée pour faciliter un ajustement des coordonnées du point spécifique après que l'unité de déplacement de bras déplace le bras d'enfilage de fil (32) pour chacun des groupes ;

une unité d'acquisition d'informations de coordonnées relatives qui est configurée pour acquérir des coordonnées des points relatifs sur la base des coordonnées ajustées du point spécifique et des informations de coordonnées relatives ; et

une unité de répétition qui est configurée pour répéter un déplacement du bras d'enfilage de fil (32) par l'unité de déplacement de bras réalisé pour chacun des groupes, jusqu'à ce que les coordonnées de tous les points appartenant à chacun des groupes soient confirmées.

FIG.1

FIG.2

UP

FRONT ⟷ REAR

DOWN

## FIG.3

(a)

(b)

REAR
LEFT ⬌ RIGHT
FRONT

REAR
LEFT ⬌ RIGHT
FRONT

FIG.4

## FIG.5

(a)

(b)

(c)

(d)

(e)

(f)

FIG.6

REAR

LEFT ←↕→ RIGHT

FRONT

FIG.7

EP 3 858 773 B1

# FIG.8

| GROUPS | POINTS (DESTINATIONS) | TYPES |
|---|---|---|
| FIRST GROUP | P01 | RELATIVE POINT |
| | P02 | SPECIFIC POINT |
| | P03 | RELATIVE POINT |
| SECOND GROUP | P04 | RELATIVE POINT |
| | P05 | SPECIFIC POINT |
| | P06 | RELATIVE POINT |
| THIRD GROUP | P07 | RELATIVE POINT |
| | P08 | RELATIVE POINT |
| | P09 | RELATIVE POINT |
| | P10 | SPECIFIC POINT |
| | P11 | RELATIVE POINT |
| | P12 | RELATIVE POINT |
| FOURTH GROUP | P13 | RELATIVE POINT |
| | P14 | RELATIVE POINT |
| | P15 | RELATIVE POINT |
| | P16 | SPECIFIC POINT |
| | P17 | RELATIVE POINT |
| ⋮ | ⋮ | ⋮ |

FIG.9

```
                    ┌──────────────┐
                    │    START     │
                    └──────┬───────┘
                           │
                           ▼
S101 ─────  ┌─────────────────────────────────────┐
            │   MOVE MAIN BODY TO LOCATION IN      │
            │  FRONT OF REFERENCE TAKE-UP UNIT     │
            └──────────────────┬──────────────────┘
                               │
                               ▼
S102 ─────  ┌─────────────────────────────────────┐
            │   ACQUIRE INSTALLATION COORDINATES   │
            │        OF THIS TAKE-UP UNIT          │
            └──────────────────┬──────────────────┘
                               │
                               ▼
S103 ─────  ┌─────────────────────────────────────┐
            │  ACQUIRE COORDINATES OF SPECIFIC POINT│
            └──────────────────┬──────────────────┘
                               │
                               ▼
S104 ─────  ┃┌────────────────────────────────────┐┃
            ┃│        ADJUST COORDINATES OF        │┃
            ┃│           SPECIFIC POINT            │┃
            ┃└────────────────────────────────────┘┃
                               │
                               ▼
S105 ─────  ┌─────────────────────────────────────┐
            │   MOVE MAIN BODY TO LOCATION IN      │
            │    FRONT OF NEXT TAKE-UP UNIT        │
            └──────────────────┬──────────────────┘
                               │
                               ▼
S106 ─────  ┌─────────────────────────────────────┐
            │   ACQUIRE INSTALLATION COORDINATES   │
            │        OF THIS TAKE-UP UNIT          │
            └──────────────────┬──────────────────┘
                               │
                               ▼
S107 ─────  ┃┌────────────────────────────────────┐┃
            ┃│        ADJUST COORDINATES OF        │┃
            ┃│           SPECIFIC POINT            │┃
            ┃└────────────────────────────────────┘┃
                               │
                               ▼
S108 ─────       ◇ IS TEACHING FINISHED ◇ ── NO ──┐
                 ◇ FOR ALL TAKE-UP UNITS? ◇        │
                           │                       │
                          YES                      │
                           ▼                       │
                    ┌──────────────┐               │
                    │     END      │               │
                    └──────────────┘               │
```

# FIG.10

```
                        ┌──────────────┐
                        │    START     │
                        └──────────────┘
                               │
                               ▼
            ┌────────────────────────────────────┐
   S201 ─── │              N = 1                 │
            └────────────────────────────────────┘
                               │
                               ▼
            ┌────────────────────────────────────┐
   S202 ─── │        START YARN THREADING        │
            └────────────────────────────────────┘
                               │
                               ▼
            ┌────────────────────────────────────┐
   S203 ─── │  MOVE TCP ACROSS PLURAL POINTS     │
            │      BELONGING TO N-TH GROUP        │
            └────────────────────────────────────┘
                               │
                               ▼
            ┌────────────────────────────────────┐
   S204 ─── │  PROMPT OPERATOR TO SELECT WHETHER TO │
            │  ADJUST COORDINATES OF SPECIFIC POINT │
            └────────────────────────────────────┘
                               │
                               ▼
   S205              ◇ IS COORDINATES OF ◇
          NO ←───── ◇ SPECIFIC POINT ADJUSTED? ◇
                               │ YES
                               ▼
            ┌────────────────────────────────────┐
   S206 ─── │     ACQUIRE ADJUSTMENT INFORMATION │
            └────────────────────────────────────┘

   S207         ◇ LAST GROUP? ◇ ──── NO
                      │ YES              S208
                      ▼            ┌──────────┐
            ┌──────────────────┐   │  N = N+1 │
   S209 ─── │ FINISH YARN THREADING │ └──────────┘
            └──────────────────┘
                      │
                      ▼
              ┌──────────────┐
              │    RETURN    │
              └──────────────┘
```

FIG.11

```
                    ┌─────────────┐
                    │    START    │
                    └──────┬──────┘
                           │
                           ▼
S201 ─────────      ┌─────────────┐
                    │    N = 1    │
                    └──────┬──────┘
                           │
                           ▼
S202 ─────────  ┌───────────────────────┐
                │  START YARN THREADING  │
                └───────────┬───────────┘
                            │
                            ▼
S203 ───── ┌──────────────────────────────────┐
           │  MOVE TCP ACROSS PLURAL POINTS    │◄──────┐
           │    BELONGING TO N-TH GROUP        │       │
           └─────────────────┬────────────────┘       │
                             │                         │
         S207                ▼                         │
              ◄────┐     ╱────────────╲      NO         │
                    ╲   ╱  LAST GROUP?  ╲────────┐      │
                     ╲ ╲               ╱         │      │
                        ╲─────┬───────╱          ▼      │
                          YES │             S208 ┌──────────┐
                              │                  │ N = N+1  │
                              ▼                  └────┬─────┘
S209 ───── ┌────────────────────────┐                │
           │  FINISH YARN THREADING  │                │
           └───────────┬────────────┘                │
                       │                              │
                       ▼                              │
                ┌─────────────┐                       │
                │     END     │                       │
                └─────────────┘
```

**REFERENCES CITED IN THE DESCRIPTION**

**Patent documents cited in the description**

- JP 2019002091 A

- JP 2017082379 A